# EUROPÄISCHE PATENTSCHRIFT

(11) **EP 3 043 892 B1**
(45) Veröffentlichungstag und Bekanntmachung des Hinweises auf die Patenterteilung: **15.11.2017**
(21) Anmeldenummer: 14758828.9
(22) Anmeldetag: 26.08.2014
(51) Int. Cl.: B01D 63/02, B01D 63/04, B01D 65/08

(54) **MEMBRANFILTER UND VERFAHREN ZUM FILTERN**
MEMBRANE FILTER AND FILTERING METHOD
FILTRE À MEMBRANE ET PROCÉDÉ DE FILTRATION

(30) Priorität: 11.09.2013 DE 102013218208
(43) Veröffentlichungstag der Anmeldung: 20.07.2016
(73) Patentinhaber: Membion GmbH, 52159 Roetgen (DE)
(72) Erfinder: VOLMERING, Dirk, 52070 Aachen (DE); VOSSENKAUL, Klaus, 52074 Aachen (DE)
(74) Vertreter: Bauer, Dirk
(86) Internationale Anmeldenummer: PCT/EP2014/068068
(87) Internationale Veröffentlichungsnummer: WO 2015/036234

(56) Entgegenhaltungen:
- EP-A1- 0 947 237
- WO-A1-2010/081228
- WO-A1-2011/136888
- WO-A2-2012/134127
- JP-A- H1 066 834
- JP-A- 2005 305 250
- JP-A- 2011 131 218

## Beschreibung

Die Erfindung betrifft einen Membranfilter zum Filtern einer zu filtrierenden Flüssigkeit mit mindestens einem Membranträger, an dem Membranen befestigt sind, mit deren Hilfe ein flüssiges Permeat aus der Flüssigkeit filtrierbar ist, und der einen Permeatsammelraum aufweist, an den die Membranen permeatseitig offen angeschlossen sind, und einen Permeatauslass zum Auslassen des Permeats aus dem Permeatsammelraum, einem unterhalb des mindestens einen Membranträgers angeordneten Gasverteilsystem mit mindestens einer nach unten offenen und oben geschlossenen Wanne, die eine Wandung mit nach unten offenen, vertikalen Schlitzen aufweist zum Verteilen eines Gases in die Flüssigkeit und mindestens einem Gaseinlass in das Gasverteilsystem.

Die Erfindung betrifft weiterhin ein Verfahren zum Filtern einer zu filtrierenden Flüssigkeit in einem solchen Membranfilter, wobei ein Gas durch den mindestens einen Gaseinlass in die mindestens eine Wanne einströmt, das Gas die mindestens eine Wanne und die Schlitze bis zu einem Teil einer Höhe der Schlitze mit einem Gaspolster füllt, das Gas aus dem Gaspolster durch die Schlitze seitlich nach außen aus der mindestens einen Wanne ausströmt und dabei an mehreren Stellen unterhalb des mindestens einen Membranträgers in die Flüssigkeit einströmt, das Gas beim seitlichen Durchströmen durch die Schlitze eine parallel zur seitlichen Gasströmung gerichtete Flüssigkeitsströmung an der Phasengrenze unterhalb des Gaspolsters generiert, das Gas in dem Membranfilter aufsteigt und dadurch eine Aufwärtsbewegung der Flüssigkeit in dem Membranfilter generiert und die aufsteigende Flüssigkeit und das Gas den mindestens einen Membranträger und die daran befestigten Membranen spülen.

Allgemein bekannte Membranfilter dieser Art sind konzipiert für die Filtration von feststoffreichen Abwässern, wie sie beispielsweise in biologischen Kläranlagen in Membranbioreaktoren (MBR) anzutreffen sind. Dabei kann der Membranfilter entweder in die Becken der Kläranlage getaucht werden oder mit Zu- und Abfuhrrohrleitungen versehen, in einem Rohr integriert trocken aufgestellt werden. Die Triebkraft für die Filtration wird in den meisten Fällen über einen permeatseitig angelegten Unterdruck realisiert, kann aber bei der trocken aufgestellten Variante auch über einen geringen feedseitigen (rohwasserseitigen) Überdruck realisiert werden.

Die in dem Membranträger befestigten Membranen können insbesondere Hohlfasermembranen sein, die einen Durchmesser von weniger als 5 mm haben, können jedoch auch Flachmembranen sein. Als Membranträger wird dabei der Teil des Membranfilters bezeichnet, in dem die Membranen befestigt sind. Hohlfasermembranen werden in der Regel mindestens unten in einem Membranträger befestigt, häufig zusätzlich auch oben in einem zweiten Membranträger. Auch Membranfilter mit Flachmembranen weisen Membranträger auf, an denen die Flachmembranen befestigt sind. Die Membranen selber haben meist eine Durchlässigkeit von Mikrofiltrationsmembranen oder Ultrafiltrationsmembranen. Die Verwendung von Membranen für die Umkehrosmose oder Nanofiltration ist möglich. Bevorzugt werden Hohlfasermembranen in einem Durchmesserbereich zwischen 0,5 und 3 mm.

Um eine Verblockung des Membranfilters durch abfiltrierte Stoffe zu vermeiden, wird der Membranfilter kontinuierlich oder in periodischen Intervallen gespült. Üblicherweise verwendete Methoden zur physikalischen Spülung der Membranfilter arbeiten mit einer permeatseitigen Rückspülung der Membranen mit Flüssigkeit oder Gas kombiniert mit einer Gasblasenspülung auf der Außenseite der Membranen. Mit dem Aufsteigen der Gasblasen wird stets auch eine Aufwärtsströmung der zu filtrierenden Flüssigkeit erzeugt, was als Mammutpumpeneffekt bezeichnet wird. Die Scherkraft der Zweiphasenströmung aus Gas und Flüssigkeit hat eine hohe Turbulenz, wodurch Beläge von den Membranen abgelöst und ausgespült werden. Bei Membranbioreaktoren wird als Gas üblicherweise Luft verwendet.

Ein solcher Membranfilter ist aus JP 10-066834 bekannt. Dabei sind mehrere Membranträger mit darin befestigten, nicht näher spezifizierten Membranen oberhalb eines Gasverteilsystems angeordnet, das mehrere nach unten offene und oben geschlossene Wannen aufweist, die eine Wandung mit nach unten offenen, vertikalen Schlitzen aufweisen zum Verteilen des Gases in die Flüssigkeit.

Bei dem bekannten Membranfilter hat die Wanne die Form eines nach unten offenen Quaders oder Halbzylinders mit seitlich in der Wandung angebrachten, senkrechten, nach unten offenen Schlitzen. Der bekannte Membranfilter hat mehrere Gaseinlässe in das Gasverteilsystem, die jeweils von oben durch die Decke der Wannen offen an den Innenraum der Wannen anschließen.

Durch die Gaseinlässe strömt ein Gas von oben in die Wannen ein und füllt diese bis zu einem Teil einer Höhe der Schlitze mit einem Gaspolster. Dabei füllen sich auch die Schlitze bis zu der gleichen Höhe mit Gas und da diese nach außen hin offen sind, strömt das Gas aus dem Gaspolster durch den mit Gas gefüllten Teil der Schlitze seitlich aus der Wanne aus und dabei an mehreren Stellen unterhalb der Membranen in die zu filtrierende Flüssigkeit ein. Um Schwankungen der Gasmenge ausgleichen zu können, sind die Schlitze für den normalen Betrieb in der Regel so dimensioniert, dass sie nur zu einem Teil mit Gas gefüllt sind. Der Füllgrad der Wanne mit Gas und damit auch der Füllgrad der Schlitze hängt von dem Gas-Volumenstrom ab, der in das Gasverteilsystem einströmt. Bei größeren Gas-Volumenströmen staut sich das Gas in der Wanne höher auf und somit ist auch ein größerer Teil der Schlitze mit Gas geflutet, d.h. der Durchströmquerschnitt für das Gas steigt an und eine größere Menge an Gas strömt durch die Schlitze. Bis zum vollständigen Aufstauen der Wanne strömt das Gas gleichmäßig aus den Schlitzen. Erst wenn die Gasmenge so groß wird, dass die Wanne überflutet, tritt die zusätzliche Gasmenge unkontrolliert aus der Wanne aus.

Nach dem Ausströmen des Gases aus den Schlitzen steigt dieses anschließend in dem Membranfilter auf und generiert dadurch eine Aufwärtsbewegung der Flüssigkeit durch den Membranfilter nach dem Mammutpumpenprinzip. Die hohe Scherkraftwirkung der Zweiphasenströmung aus der aufsteigenden Flüssigkeit und dem Gas spült dabei die Membranen, wobei Beläge und Ablagerungen abgelöst und aus dem Filter ausgetragen werden.

Beim seitlichen Durchströmen durch die Schlitze generiert das Gas eine parallel zur seitlichen Gasströmung gerichtete Flüssigkeitsströmung an der Phasengrenze unterhalb des Gaspolsters, die den unten aus dem Gaspolster herausragenden Teil der Wandung zwischen den Schlitzen anströmt. Mit dieser Strömung werden in Membranbioreaktoren, insbesondere bei Anwendungen zur kommunalen Abwasseraufbereitung, häufig auch Haare und faserige Verbindungen mit angeschwemmt.

Bei dem in JP 10-066834 beschriebenen Membranfilter wirken die unten aus dem Gaspolster herausragenden Abschnitte der Wandung zwischen den Schlitzen wie ein Kamm oder Rechen auf die in der zu filtrierenden Flüssigkeit enthaltenen Haare und faserigen Verbindungen, die sich dadurch leicht in den Schlitzen festsetzen. Werden Haare beispielsweise durch die Strömung mit dem einen Ende in den einen und mit dem anderen in einen benachbarten Schlitz eingetragen, so werden diese an den Anströmkanten der Wandung zwischen den Schlitzen festgehalten, was zu einer Verblockung der Schlitze führen kann. Dadurch wird die durch diese Schlitze strömende Gasmenge beeinträchtigt bis hin zum völligen Erliegen. Die Folge ist eine unzureichende Begasung und Spülung der darüber liegenden Membranbereiche, wodurch die Gefahr einer Verblockung dieser Bereiche besteht.

### Aufgabe

Der Erfindung liegt die Aufgabe zugrunde, einen Membranfilter anzugeben, bei dem die Verblockungsneigung reduziert ist.

### Lösung

Ausgehend von dem bekannten Membranfilter wird nach der Erfindung vorgeschlagen, dass die mindestens eine Wanne jeweils zwischen benachbarten Schlitzen in mindestens einem vertikalen, orthogonal zur Wandung verlaufenden Schnitt eine Innenkante aufweist, die mindestens im Bereich einer unteren Hälfte der Schlitze in jedem Punkt einen Winkel zur Horizontalen von kleiner als 60° aufweist. Diese Bedingung kann entweder durch eine größere Schräge oder eine Abrundung an dieser Innenkante realisiert werden. Dadurch entsteht an den unteren Innenkanten der Wandung ein Anströmbereich für die unterhalb des Gaspolsters strömende Flüssigkeit, an dem Haare und faserige Verbindungen mit der Flüssigkeitsströmung abgestreift werden, wodurch die Verblockungsneigung der Schlitze und damit auch der darüber befindlichen Membranbereiche reduziert wird.

In einer vorteilhaften Ausgestaltung des erfindungsgemäßen Membranfilters ist das Gasverteilsystem an der Unterseite des mindestens einen Membranträgers ausgebildet. In diesem Fall sind der Membranträger und das Gasverteilsystem ein Bauteil. Dadurch wird das Gas direkt an der Unterseite des Membranträgers in die zu filtrierende Flüssigkeit verteilt, und zwar genau an den Stellen, an denen es aus dem Gasverteilsystem tritt. Somit umströmen die Gasblasen direkt an ihrem Bestimmungsort den Membranträger und die darin befestigten Membranen. Durch die Ausgestaltung des Gasverteilsystems an der Unterseite des Membranträgers werden potentielle Fehlströmungen des Gases vermieden.

Aufgrund der geringen Einblastiefe reduziert sich zudem der Energiebedarf für die Begasung im Vergleich zu Systemen mit getrennt unterhalb des Membranträgers installiertem Gasverteilsystem. Ein weiterer Vorteil sind die geringeren Fertigungskosten, da der Membranfilter durch die Ausbildung des Gasverteilsystems unten am Membranträger ein Bauteil weniger aufweist.

Um ein Abstreifen von Haaren und faserigen Verbindungen an der abgerundeten bzw. schrägen unteren Innenkante der Wanne zu gewährleisten, ist eine horizontale Ausdehnung dieser Innenkante von etwa 10 bis 15 mm erforderlich. Im einfachsten Fall resultiert diese Anforderung in einer dementsprechend dick gestalteten Wandung der Wanne.

In dem erfindungsgemäßen Membranfilters kann alternativ das Begasungssystem als eigenes Bauteil unterhalb des Membranträgers von diesem beabstandet installiert sein. Das Gasverteilsystem kann in diesem Fall als eigenes Bauteil gestaltet werden. Allerdings hat die Beabstandung zwischen dem Gasverteilsystem und dem Membranträger auch einen Nachteil: In dem mit Flüssigkeit gefüllten Strömungsbereich zwischen Gasverteilsystem und Membranträger können die Gasblasen durch Querströmungen im Bioreaktor oder sonstige Störungen abgelenkt werden und nicht an der vorgesehenen Stelle auf den Membranträger treffen, wodurch eine gleichmäßige Begasung der Membranen nicht mehr sicher gestellt werden kann. Zudem steigt der Energiebedarf für die Begasung aufgrund der größeren Einblastiefe. Bei einer Einblastiefe von 2 m bedeuten 20 cm zusätzliche Einblastiefe bereits einen 10 % höheren Energiebedarf.

Bei der Ausgestaltung des Membranfilters ist es vorteilhaft, dass die mindestens eine Wanne jeweils zwischen benachbarten Schlitzen mindestens eine von der Wandung nach innen verlaufende vertikale Rippe aufweist, deren Ausdehnung in die mindestens eine Wanne hinein nach unten abnimmt. Wird das Gasverteilsystem und damit auch die Wanne als Spritzgussteil gestaltet, so hat die dickere Wandung den Nachteil von Materialanhäufungen. Bildlich vorgestellt sind die Rippen der einzige Teil der verdickten Wandung, der erhalten bleibt, während die anderen Bereiche der dickeren Wandung weggeschnitten werden, so dass nur noch eine Wandung in der sonst üblichen dünneren Wandstärke des Bauteils übrig bleibt. Durch die Rippen werden Materialanhäufungen im Bauteil vermieden und eine Fertigung als Spritzgussteil ermöglicht. In diesem Fall bilden die Rippen den Teil der Wandung zwischen jeweils benachbarten Schlitzen, an dem Haare und faserige Verbindungen nach außen abgestreift werden können. Der vertikale Schnitt, der eine Innenkante aufweist, die mindestens im Bereich einer unteren Hälfte der Schlitze in jedem Punkt einen Winkel zur Horizontalen von kleiner als 60° aufweist, verläuft in diesem Fall längs durch die Rippen.

Da die Rippen jedoch im Grunde genommen ein Überbleibsel der verdickten Wandung der Wanne sind, benötigen diese die gleiche horizontale Ausdehnung von etwa 10 bis 15 mm. Dadurch sind der Gestaltung der Wanne Grenzen gesetzt. So können Wannen von einer Gesamtbreite unter 3 cm strömungstechnisch nicht mehr sinnvoll gestaltet werden, da der verbleibende offene Strömungsquerschnitt zwischen den Rippen im Innern der Wanne in der Regel zu klein ist, um die gesamte Gasmenge durchströmen zu lassen.

In einem erfindungsgemäßen Membranfilter kann die Wanne des Gasverteilsystems unterschiedliche Grundrissformen aufweisen von rund über rechteckig und vieleckig bis hin zu völlig freien Formen. Sind das Gasverteilsystem und damit auch die Wanne an der Unterseite des Membranträgers ausgebildet, nimmt die Wanne zwangsläufig einige der geometrischen Details und Abmessungen des Membranträgers auf.

In einer vorteilhaften Ausgestaltung des erfindungsgemäßen Membranfilters weist das Gasverteilsystem nach unten offene Gasleitkanäle auf, die zumindest an einen Teil der Schlitze außen anschließen zur Weiterleitung und Verteilung des Gases von der mindestens einen Wanne weg. Dabei ist es der Vorteil der Gasleitkanäle, dass damit auch deutlich schmalere Teile des Gasverteilsystems realisiert werden können.

So kann der Membranträger eines erfindungsgemäßen Membranfilters beispielsweise einen Anker aufweisen, an dem mehrere Finger angebracht sind, an denen oben Membranen befestigt sind. Wird die Wanne beispielsweise erfindungsgemäß unterhalb des breiteren Ankers ausgebildet, so werden die Gasleitkanäle auf der Unterseite der Finger ausgebildet und ermöglichen eine Weiterleitung des Gases in weiter von der Wanne entferntere Bereiche des Membranfilters.

Die Gasleitkanäle eines erfindungsgemäßen Membranfilters haben einen Boden, der entweder horizontal verläuft oder eine Neigung gegenüber der Horizontalen aufweist, derart, dass das Ende der Gasleitkanäle oberhalb der Position ihres an die Schlitze anschließenden Anfangs liegt. Durch den geneigten Boden wird die Weiterleitung des Gases in den Gasleitkanälen beschleunigt und eine Verblockungsgefahr der Gasleitkanäle reduziert.

In einer weiteren vorteilhaften Ausgestaltung eines solchen erfindungsgemäßen Membranfilters schließen die Gasleitkanäle vertikal nach oben versetzt an die Schlitze an. Dadurch wird die Interaktion zwischen den Schlitzen und den daran anschließenden Gasleitkanälen deutlich reduziert, was eine gleichmäßigere Durchströmung der Schlitze ohne und mit angeschlossenen Gasleitkanälen gewährleistet. Zudem kann bei weiter nach oben versetzt an die Schlitze anschließenden Gasleitkanälen eine spritzgusstechnisch günstigere Gestaltung der Bauteile realisiert werden aufgrund der Vermeidung von Materialanhäufungen im Bauteil.

Bei einer weiteren vorteilhaften Ausgestaltung des erfindungsgemäßen Membranfilters werden die Schlitze nach unten breiter. Dies hat den Vorteil, dass sich bei steigendem Volumenstrom und demzufolge sich weiter nach unten aufstauendem Gaspolster in der Wanne die Querschnittsfläche der Schlitze überproportional vergrößert. Dadurch steigt der Gasdruck im Gaseinlass nur minimal an, was die Selbstregulierung der gleichmäßigen Durchströmung der Schlitze und damit die Gleichmäßigkeit der Begasung verbessert. Die nach unten breiter werdenden Schlitze bilden somit eine variable "Drossel" für die durch die Schlitze strömende Gasmenge bei unterschiedlichen Gasvolumenströmen. Durch die Querschnittsform der Drossel kann der volumenstromabhängige Füllstand in den Schlitzen beeinflusst werden.

Bei einer weiteren vorteilhaften Ausgestaltung des erfindungsgemäßen Membranfilters weisen die Schlitze unterschiedlich große Querschnittsflächen auf. Da es sein kann, dass bei unterschiedlicher geometrischer Ausgestaltung der Wanne, insbesondere auch wenn an einigen der Schlitze Gasleitkanäle angeschlossen sind, mit der durch die verschiedenen Schlitze strömenden Gasmenge unterschiedlich große Membranflächen gespült werden sollen, ist es vorteilhaft, die durch die Schlitzte strömende Gasmenge durch die geometrische Gestaltung der Schlitze an die unterschiedlichen erforderlichen Gasmengen anzupassen. Daher werden bei Schlitzen, an die ein Gasleitkanal anschließt, der das Gas in weiter nach außen von der Wanne weg gelegene Bereiche des Membranfilters transportiert, größere Querschnittsflächen der Schlitze realisiert, indem diese Schlitze eine größere Breite aufweisen.

Bei einer weiteren vorteilhaften Ausgestaltung des erfindungsgemäßen Membranfilters schließt der mindestens eine Gaseinlass an die mindestens eine Wanne seitlich an. Dies ist besonders vorteilhaft, wenn das Gasverteilsystem an der Unterseite des Membranträgers ausgebildet ist. Die Gaszufuhr erfolgt in diesem Fall auf Höhe der Schlitze, wodurch vertikale Strömungen des Gases und damit ein Überschwappen des Gaspolsters aus der Wanne vermieden werden.

Im Fall eines vom Membranträger separierten Gasverteilsystems kann der Gaseinlass alternativ auch von oben durch den oben liegenden Boden der Wanne realisiert werden. Alternativ kann ein von der Wanne und dem Gasverteilsystem getrennter Gaseinlass ermöglichen, dass das Gas beispielsweise aus einem unterhalb der Wanne positionierten separaten Rohr in die Wanne einströmt.

Ausgehend von dem bekannten Verfahren wird nach der Erfindung vorgeschlagen, dass die unterhalb des Gaspolsters generierte Flüssigkeitsströmung jeweils zwischen benachbarten Schlitzen in mindestens einem vertikalen, orthogonal zur Wandung verlaufenden Schnitt eine Innenkante der mindestens einen Wanne anströmt, die mindestens im Bereich einer unteren Hälfte der Schlitze einen Winkel zur Horizontalen von kleiner als 60° aufweist. Dadurch werden Haare und faserige Verbindungen an der Innenkante abgestreift und Verblockungen der Schlitze und der darüber liegenden Membranbereiche weitgehend vermieden. Dadurch wird insgesamt die Verblockungsneigung des Membranfilters reduziert.

In einer bevorzugten Ausführung des erfindungsgemäßen Verfahrens strömt das Gas nach Durchströmen von einigen der Schlitze durch Gasleitkanäle in weiter von der mindestens einen Wanne nach außen entfernte Bereiche des Membranfilters. Dadurch wird insgesamt eine gleichmäßige Verteilung des Gases über den gesamten Querschnitt des Membranfilters erreicht.

In einer weiteren bevorzugten Ausführung des erfindungsgemäßen Verfahrens strömt das Gas aus einem an der Unterseite des mindestens einen Membranträgers ausgebildeten Gasverteilsystem aus und umströmt nach dem Einströmen in die Flüssigkeit den mindestens einen Membranträger. Dies hat den Vorteil, dass das Gas vor Erreichen des Membranträges durch keinen zusätzlichen Strömungsbereich strömen muss, in dem es durch Störeinflüsse davon abgehalten werden kann, seinen Bestimmungsort am Membranträger zu erreichen.

Zur Ausführung eines erfindungsgemäßen Verfahrens kann der Membranfilter in die Flüssigkeit getaucht sein. Der Membranfilter ist dann von der zu filtrierenden Flüssigkeit umgeben und aufgrund des Mammutpumpeneffektes des in das Fußelement eingeleiteten und im Membranfilter aufsteigenden Gases wird die zu filtrierenden Flüssigkeit von unten in das Fußelement angesaugt und durchströmt gemeinsam mit dem Gas die Filtereinheit, bevor beide oben aus der Filtereinheit ausströmen.

Im Rahmen eines erfindungsgemäßen Verfahrens kann die zu filtrierende Flüssigkeit mittels einer ersten Flüssigkeitsleitung dem Fußelement zugeführt und mittels einer zweiten Flüssigkeitsleitung aus der Filtereinheit abgeführt werden, wobei die zweite Flüssigkeitsleitung oberhalb der Membranen an einem Rohr angeschlossen ist, das an das Fußelement oben anschließend die Membranen umgibt. Diese Variante des Betriebs einer erfindungsgemäßen Filtereinheit wird auch als "trocken aufgestellter" Betrieb bezeichnet.

Bei der Realisierung größerer Filtereinheiten können mehrere erfindungsgemäße Membranfilter auf einem gemeinsamen Rahmen parallel nebeneinander montiert werden. Dabei werden die Permeatauslässe der einzelnen Membranfilter mit Rohrleitungen verbunden, die der Ableitung des entstehenden Permeates aus den Membranfiltern dienen. Auch die Gaseinlässe werden mit Rohrleitungen verbunden, die der Zuführung des Gases in die Membranfilter dienen. Dabei können die Gaszuführungsleitungen einzeln mit Drosseln ausgestattet sein zur Vergleichmäßigung der Luftzuführung auf die einzelnen Membranfilter. Vorteilhaft ist es dabei, die Positionierung dieser Drosseln in den Gaszuführungsleitungen oberhalb der Flüssigkeitsoberfläche zu positionieren, um auch beim Abschalten des Filters ein Fluten der Drosselquerschnitte zu vermeiden und damit eine Verstopfung der Drosseln durch Feststoffbestandteile der Flüssigkeit auszuschließen.

### Ausführungsbeispiele

Die Erfindung wird nachfolgend anhand von Ausführungsbeispielen erläutert. Es zeigen
- Fig. 1a bis1e: einen ersten erfindungsgemäßen Membranfilter (Gesamtschnitt Teilschnitte und Ansichten des Fußelementes),
- Fig. 2a bis 2c: Strömungsverhältnisse im ersten Membranfilter,
- Fig. 3: den ersten Membranfilter im Tauchbetrieb,
- Fig. 4: den ersten Membranfilter im trocken aufgestellten Betrieb,
- Fig. 5a bis 5i: Details eines zweiten erfindungsgemäßen Membranfilters,
- Fig. 6a bis 6c: Teilansichten und Schnitte des Gasverteilsystems des zweiten Membranfilters,
- Fig. 7a bis 7d: weitere erfindungsgemäße Membranfilter,
- Fig. 8a: Ansicht und Schnitt einer Wanne eines siebten erfindungsgemäßen Membranfilters,
- Fig. 8b: Ansicht und Schnitt einer Wanne eines achten erfindungsgemäßen Membranfilters,
- Fig. 9a und 9b: Ansicht und Schnitt eines Fußelementes eines neunten erfindungsgemäßen Membranfilters,
- Fig. 10a bis 10c: Ansicht und Schnitte eines Gasverteilsystems eines zehnten erfindungsgemäßen Membranfilters,
- Fig. 11a und 11b: Varianten des Gasverteilsystems weiterer erfindungsgemäßer Membranfilter.

Die in den Figuren dargestellten Zeichnungen sind nicht maßstäblich. Alle nicht angegebenen Details von im Folgenden beschriebenen erfindungsgemäßen Membranfiltern sind identisch mit den Ausführungen bereits zuvor beschriebener erfindungsgemäßer Membranfilter.

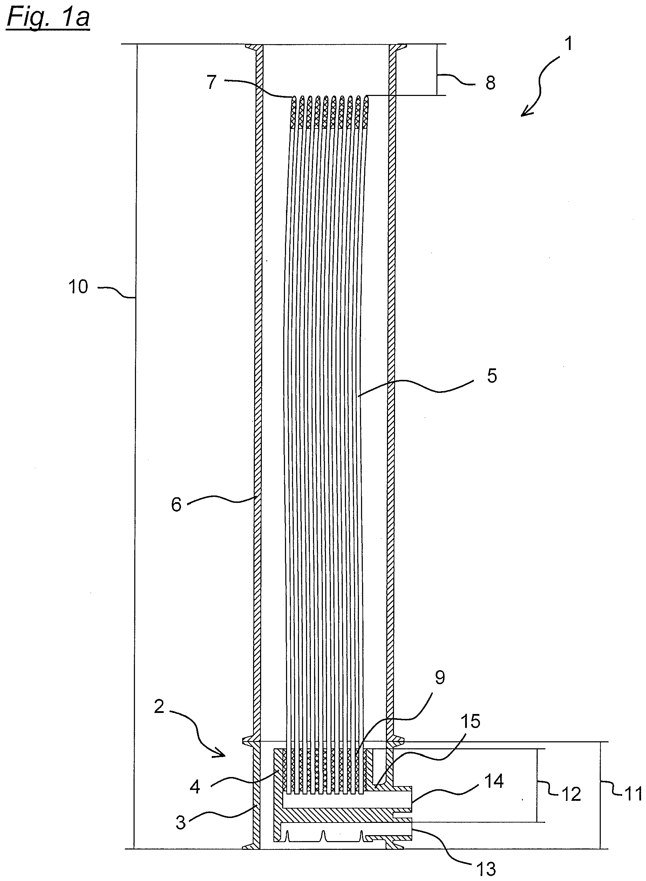

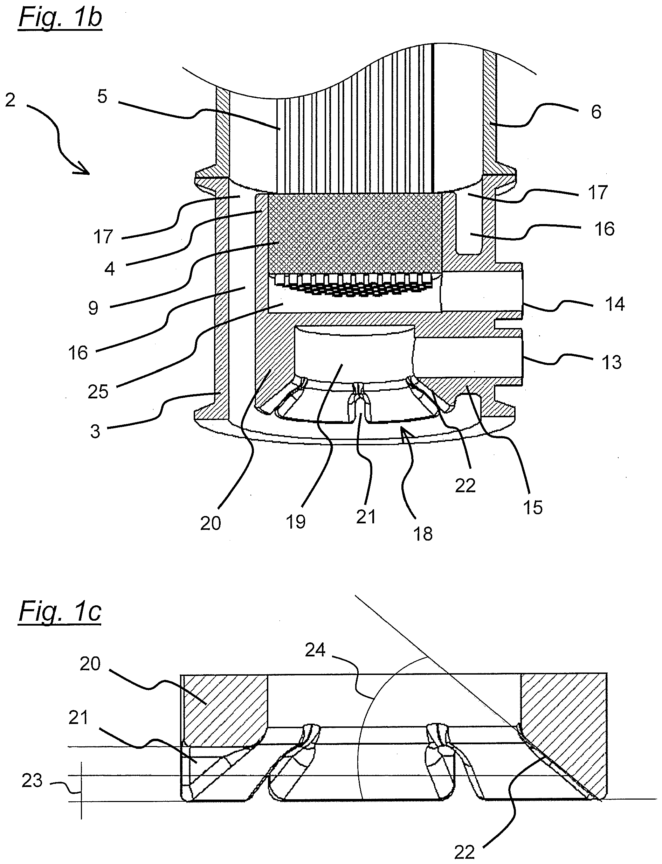

Die Figuren 1a bis 1e zeigen Schnitte und Ansichten eines ersten erfindungsgemäßen Membranfilters 1. Dieser weist ein Fußelement 2 auf mit einem Mantel 3 und einen sich darin befindlichen Membranträger 4, in dem oben Hohlfasermembranen 5 befestigt sind. An den Mantel 3 des Fußelementes 2 schließt oben ein zylindrisches Rohr 6 an.

Die Hohlfasermembranen 5 sind gewebeverstärkt und haben einen Außendurchmesser von 2,5 mm. Sie sind am oberen Ende 7 einzeln verschlossen. Das Rohr 6 überragt das obere Ende 7 um eine Länge 8 von 10 cm. Die Hohlfasermembranen 5 sind unten in dem Membranträger 4 über eine Harzschicht 9 abdichtend eingegossen, wobei Lumen der Hohlfasermembranen 5 offen bleiben.

Der Membranfilter 1 weist eine Höhe 10 von 200 cm, das Fußelement 2 eine Höhe 11 von 12 cm und der Membranträger 4 eine Höhe 12 von 11 cm auf. Das Fußelement 2 und das Rohr 6 weisen beide einen Außendurchmesser von 75 mm auf. Das Rohr 6 weist einen Innendurchmesser von 68 mm auf. Das Fußelement 2 weist ferner einen Gaseinlass 13 und einen Permeatauslass 14 auf.

Der Membranträger 4 ist über eine Ankerstelle 15 mit dem Mantel 3 verbunden. Das Fußelement 2 weist zwischen Mantel 3 und Membranträger 4 einen Strömungsraum 16 auf, der als Ringspalt mit einer Breite von 9 mm ausgebildet ist, den Membranträger 4 umgibt und nur durch die Ankerstelle 15 unterbrochen wird. Der Strömungsraum 16 grenzt in jedem horizontalen Schnitt sowohl an den Mantel 3 als auch an den Membranträger 4.

Der Strömungsraum 16 wird in vertikaler Richtung durch den Überschneidungsbereich der Höhe 11 des Fußelementes 2 und der Höhe 12 des Membranträgers 4 begrenzt. Das Fußelement 2 ist nach unten offen und durchströmbar. Der Strömungsraum 16 weist oben einen Auslass 17 in das Rohr 6 auf.

Der Gaseinlass 13 ist mit einem auf der Unterseite des Membranträgers 4 ausgebildeten Gasverteilsystem 18 verbunden, das eine nach unten offene und oben geschlossene Wanne 19 aufweist, die eine Wandung 20 aufweist mit nach unten offenen vertikalen Schlitzen 21. Die Wanne 19 weist jeweils mittig zwischen benachbarten Schlitzen 21 in einem vertikalen, orthogonal zur Wandung 20 verlaufenden Schnitt eine Innenkante 22 auf, die über die gesamte Höhe der Schlitze 21 eine schräge Kante ist, deren Winkel 24 zur Horizontalen 40° beträgt. Alternativ kann die Innenkante 22 im Bereich einer unteren Hälfte 23 der Schlitze 21 in jedem Punkt einen Winkel 24 zur Horizontalen von kleiner als 60° aufweisen.

Das Fußelement 2 weist ferner einen Permeatsammelraum 25 auf, in den die Lumen der Hohlfasermembranen 5 münden. Der Permeatsammelraum 25 ist mit dem Permeatauslass 14 des Fußelementes 2 verbunden.

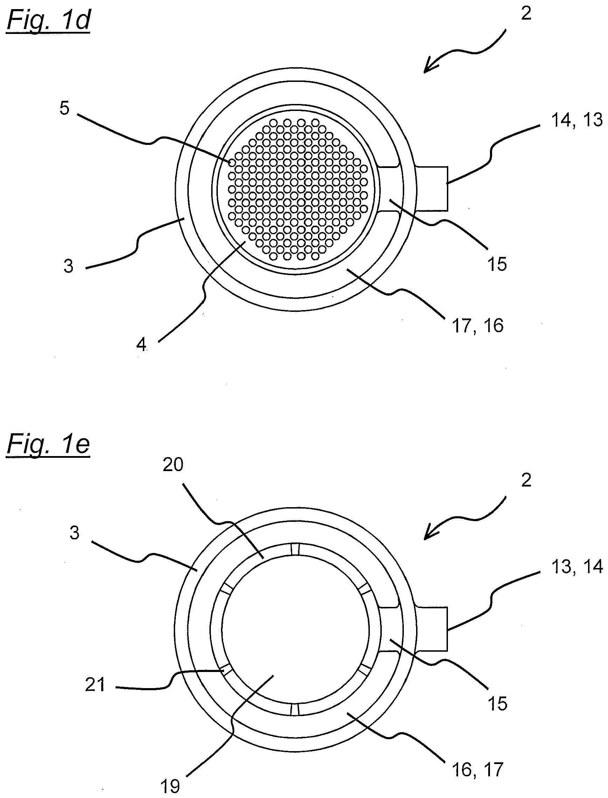

Figur 1d zeigt eine Draufsicht auf das Fußelement 2 mit den Hohlfasermembranen 5 ohne das Rohr 6. Die Anzahl der dargestellten Hohlfasermembranen 5 entspricht nicht der tatsächlichen Anzahl der Hohlfasermembranen 5. Und Figur 1e zeigt eine Ansicht des Fußelementes 2 von unten. Die Anzahl der Schlitze 21 beträgt 6. Diese sind über den Umfang der Wanne 19 in deren Wandung 20 gleichmäßig verteilt.

Der Permeatauslass 14 und der Gaseinlass 13 liegen in Verlängerung der Ankerstelle 15 radial nach außen.

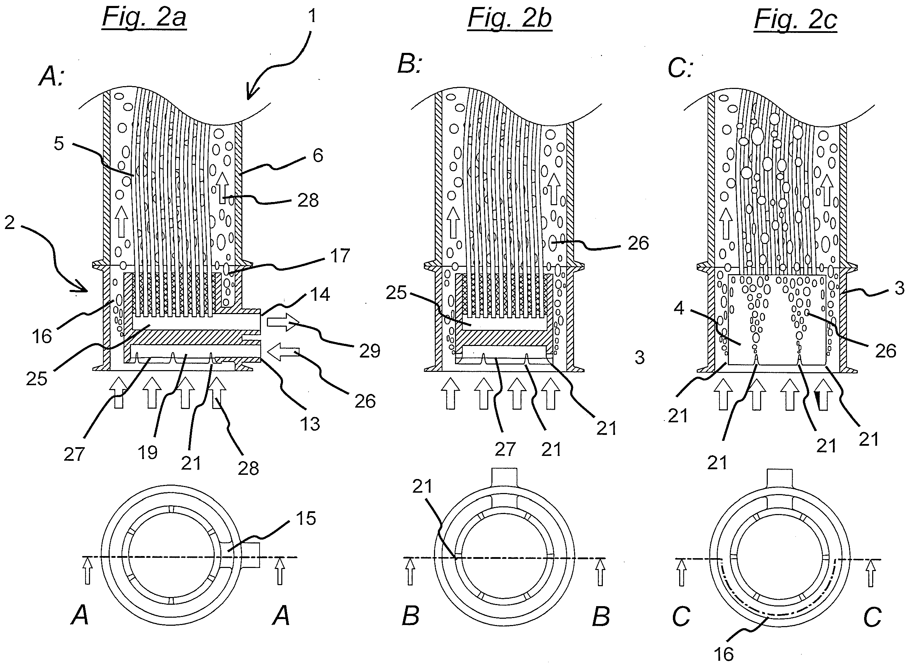

Die Figuren 2a bis 2c zeigen die Strömungsverhältnisse im Fußelement 2 und im unteren Teil des Rohres 6 des ersten Membranfilters 1 während des Filtrationsbetriebs.

Dabei zeigt Figur 2a einen ersten vertikalen Schnitt durch den unteren Teil des Membranfilters 1, wobei der Schnitt auch durch die Ankerstelle 15 verläuft.

Durch den Gaseinlass 13 wird im Betrieb des Membranfilters 1 ein Gas 26 in das Fußelement 2 und den Strömungsraum 16 eingeleitet. Dabei strömt das Gas 26 über den Gaseinlass 13 zunächst in die Wanne 19 ein. Das Gas 26 füllt die Wanne 19 bis zu einem Teil der Höhe der Schlitze 21 und bildet in der Wanne 19 ein Gaspolster 27. Das Gas 26 füllt auch die Schlitze 21 bis zur Höhe des Gaspolsters 27 und strömt schließlich über den mit Gas 26 gefüllten Teil der Schlitze 21 seitlich aus der Wanne 19, bzw. aus dem Gaspolster 27 aus und dabei in eine zu filtrierende Flüssigkeit 28 ein.

Bis auf den Strömungsraum 16 verschließt der Membranträger 4 das Fußelement 2 vollständig für die Durchströmung der Flüssigkeit 28 und des Gases 26, d.h. bis auf den Strömungsraum 16 gibt es in dem Fußelement 2 keine weiteren Durchgangsöffnungen für das Gas 26 und die Flüssigkeit 28.

Oberhalb des Fußelementes 2 gibt es in dem Rohr 6 außer den Hohlfasermembranen 5 keine weiteren Einbauten. Daher schweben die Hohlfasermembranen 5 nur unten fixiert ohne Behinderung frei in der Flüssigkeit 28. Somit können sich auch Haare, faserige Verbindungen oder sonstige Störstoffe aus der Flüssigkeit 28 nicht in diesem Bereich festsetzen.

Beim seitlichen Durchströmen durch die Schlitze 21 generiert das Gas 26 eine parallel zur seitlichen Gasströmung radial nach außen gerichtete Flüssigkeitsströmung an der Phasengrenzfläche unterhalb des Gaspolsters 27. Diese strömt zwischen jeweils benachbarten Schlitzen 21 die Innenkante 22 der Wandung 20 an, die in jedem Punkt im Bereich der Schlitze einen Winkel zur Horizontalen von kleiner als 60° aufweist. An dieser schrägen Innenkante werden in der zu filtrierenden Flüssigkeit 28 enthaltene Haare und faserige Verbindungen durch die nach außen gerichteten Gasströmung und Flüssigkeitsströmung abgestreift, wodurch die Gefahr des Festsetzens dieser Störstoffe im Membranfilter 1 reduziert wird.

Nach dem Durchströmen der Schlitze 21 steigt das Gas 26 durch seinen Auftrieb in dem Membranfilter 1 auf und erzeugt dadurch eine Aufwärtsströmung der Flüssigkeit 28. Diese wird in den Membranfilter 1 nur von unten eingesaugt. Das Gas 26 und die Flüssigkeit 28 durchströmen den Strömungsraum 16 des Fußelementes 2, strömen danach gemeinsam durch den Auslass 17 in das Rohr 6 ein und oben am Rohr 6 aus dem Membranfilter 1 aus.

Durch die hohe Scherkraftwirkung der Zweiphasenströmung aus Flüssigkeit 28 und Gas 26, die durch den Mammutpumpeneffekt im Membranfilter 1 aufsteigt, werden im Strömungsraum 16 des Fußelementes 2 der Membranträger 4 und im Rohr 6 die Hohlfasermembranen 5 außen gespült, und dadurch Beläge und Ablagerungen von den Oberflächen des Membranträgers 4 und der Hohlfasermembranen 5 abgespült und aus dem Membranfilter 1 ausgetragen.

Zwischen der Außenseite der Hohlfasermembranen 5 und deren Lumen liegt eine Druckdifferenz an, aufgrund derer ein flüssiges Permeat 29 aus der Flüssigkeit 28 filtriert wird und in die Lumen der Hohlfasermembranen 5 strömt. Das Permeat 29 wird aus den Lumen der Hohlfasermembranen 5 gesammelt und strömt dann durch den Permeatauslass 14 aus dem Membranfilter 1 aus.

Durch die Ankerstelle 15 erfolgen sowohl die Zufuhr des Gases 26 als auch die Abfuhr des im Membranfilter 1 filtrierten Permeates 29.

Der Gaseinlass 13 ist strömungstechnisch mit dem Strömungsraum 16 innerhalb des Fußelementes 2 verbunden, so dass das Fußelement 2 vom Gaseinlass 13 durch die Wanne 19, durch die Schlitze 21 und durch den Strömungsraum 16 bis zum Auslass 17 durchströmbar ist.

Figur 2b zeigt einen weiteren, jedoch um 90° versetzten Schnitt durch den unteren Teil des ersten Membranfilters 1. Dabei wird die Ankerstelle 15 nicht geschnitten, dafür aber zwei der Schlitze 21. Zu erkennen ist das seitliche Ausströmen des Gases 26 durch die Schlitze 21 aus der Wanne 19, bzw. aus dem Gaspolster 27.

Zudem ist in diesem Schnitt der Permeatsammelraum 25, nicht aber der Permeatauslass 14 zu sehen.

Figur 2c zeigt einen weiteren Schnitt durch den unteren Teil des ersten Membranfilters 1, der in diesem Fall nur den Mantel 3 schneidet und ansonsten durch den Strömungsraum 16 verläuft, so dass die Außenseite des Membranträgers 4 sichtbar wird. Dabei ist das seitliche Ausströmen des Gases 26 aus den Schlitzen 21 zu erkennen.

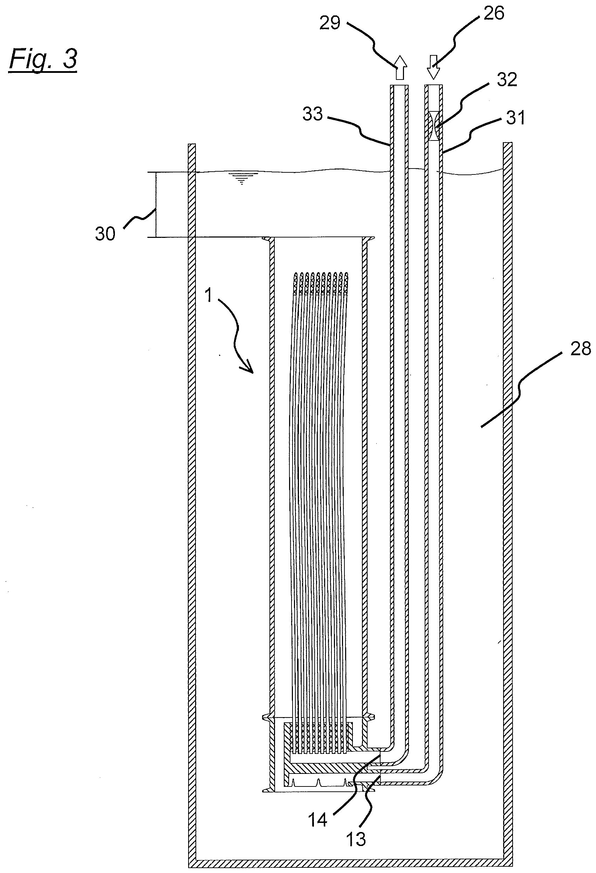

Figur 3 zeigt den ersten Membranfilter 1 im Tauchbetrieb. Gasblasen in der Flüssigkeit 28 sind dabei nicht dargestellt. Dabei wird der Membranfilter 1 in ein Becken mit der zu filtrierenden Flüssigkeit 28 eingetaucht, so weit dass ein Flüssigkeitsüberstand 30 von 15 cm oberhalb des Membranfilters 1 bis zur Oberfläche der Flüssigkeit 28 bleibt. Über eine Gaszuführleitung 31 wird das Gas 26 von oberhalb der Oberfläche der Flüssigkeit 28 zum Gaseinlass 13 geführt. In der Gaszuführleitung 31 ist eine Drossel 32 eingebaut. Diese ist an dieser Stelle exemplarisch dargestellt und ist nur erforderlich, wenn mehrere Membranfilter 1 parallel betrieben und gleichzeitig mit Gas 26 versorgt werden. Die Drosseln 32 in den Gaszuführleitungen 31 dienen dann dazu, die in die einzelnen Membranfilter 1 strömenden Mengen an Gas 26 zu vergleichmäßigen. Die Drossel 32 ist oberhalb der Oberfläche der zu filtrierenden Flüssigkeit 28 angeordnet. Über eine Permeatleitung 33 wird das im Membranfilter 1 entstehende Permeat 24 vom Permeatauslass 14 abgeleitet.

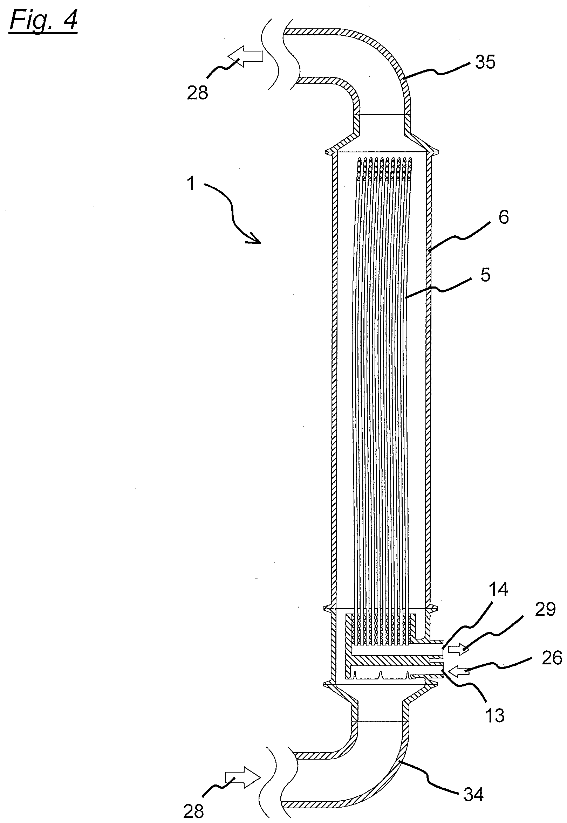

Figur 4 zeigt den ersten erfindungsgemäßen Membranfilter 1 im trocken aufgestellten Betrieb. Gasblasen in der zu filtrierenden Flüssigkeit 28 sind dabei nicht dargestellt. Die Flüssigkeit 28 wird über eine erste Flüssigkeitsleitung 34 dem Membranfilter 1 zugeführt. Aus der Flüssigkeit 28 wird ein Permeat 29 filtriert, das den Permeatauslass 14 verlässt. Durch den Gaseinlass 13 wird das Gas 26 zugeführt. Über eine zweite Flüssigkeitsleitung 35 werden das Gas 26 und die Flüssigkeit 28 abzüglich des Permeates 29 abgeführt. Die zweite Flüssigkeitsleitung 35 ist oben an das Rohr 6 angeschlossen, das die Hohlfasermembranen 5 überragt.

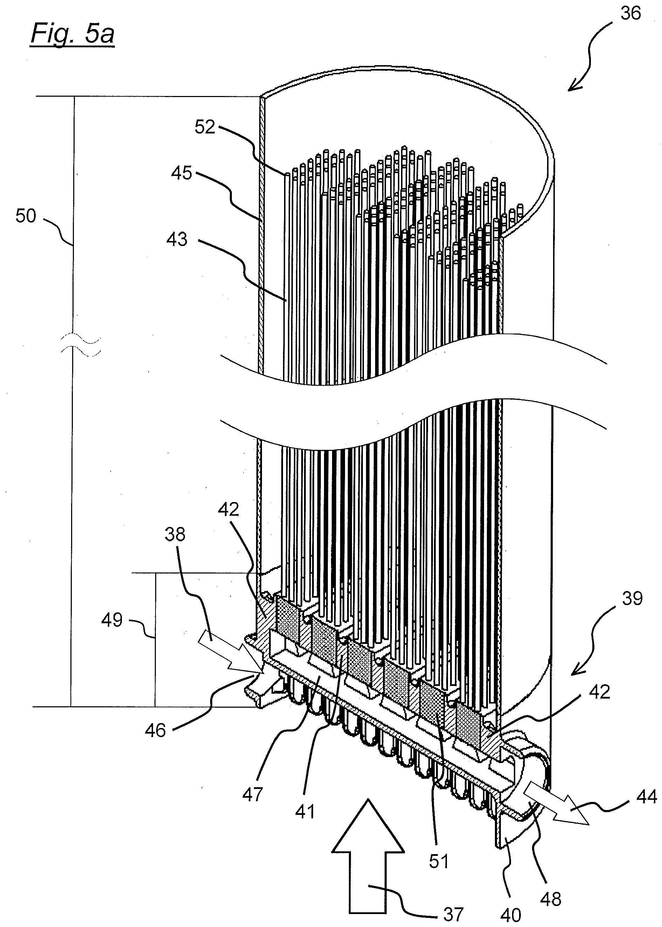

Die Figuren 5a bis 5g zeigen Ansichten und unterschiedliche Schnitte eines zweiten erfindungsgemäßen Membranfilters 36.

Figur 5a zeigt einen Längsschnitt durch den zweiten Membranfilter 36. Dieser weist ein nach unten zu einer zu filtrierenden Flüssigkeit 37 hin offenes, von einem Gas 38 und der Flüssigkeit 37 durchströmbares Fußelement 39 auf, das einen rohrförmigen Mantel 40 und genau einen darin befindlichen Membranträger 41 aufweist, wobei der Membranträger 41 mit dem Mantel 40 über zwei Ankerstellen 42 verbundenen ist. Oben in dem Membranträger 41 sind Hohlfasermembranen 43 befestigt mit jeweils einem Lumen, in das ein flüssiges Permeat 44 aus der Flüssigkeit 37 filtrierbar ist. Zudem weist der Membranfilter 36 ein im Umfang geschlossenes Rohr 45 auf, dass an den Mantel 40 des Fußelementes 39 oben anschließend die Hohlfasermembranen 43 umgibt, sowie einen Gaseinlass 46 zum Einlassen des Gases 38 in das Fußelement 39. Das Fußelement 39 weist ferner einen Permeatsammelraum 47 auf, der mit den Lumen der Hohlfasermembranen 43 verbunden ist, zum Sammeln des Permeates 44 aus den Hohlfasermembranen 43 sowie einen Permeatauslass 48 zum Ablassen des Permeates 44 aus dem Permeatsammelraum 47.

Das Fußelement 31 hat eine Höhe 49 von 12 cm und der Membranfilter 36 eine Höhe 50 von 212 cm. Die Hohlfasermembranen 43 sind unten in dem Membranträger 41 über eine Harzschicht 51 gegen die zu filtrierende Flüssigkeit 37 abdichtend eingegossen, wobei die Lumen der Hohlfasermembranen 43 offen bleiben. Die Anzahl der dargestellten Hohlfasermembranen 43 entspricht nicht der tatsächlichen Anzahl der Hohlfasermembranen 43. Die Hohlfasermembranen 43 sind oben einzeln verschlossen und schweben bis auf die untere Einspannung oben frei in der zu filtrierenden Flüssigkeit 37. Sie werden vollständig vom Rohr 45 umschlossen. Das Rohr 45 ragt um 10 cm über die oberen Enden 52 der Hohlfasermembranen 43 hinaus.

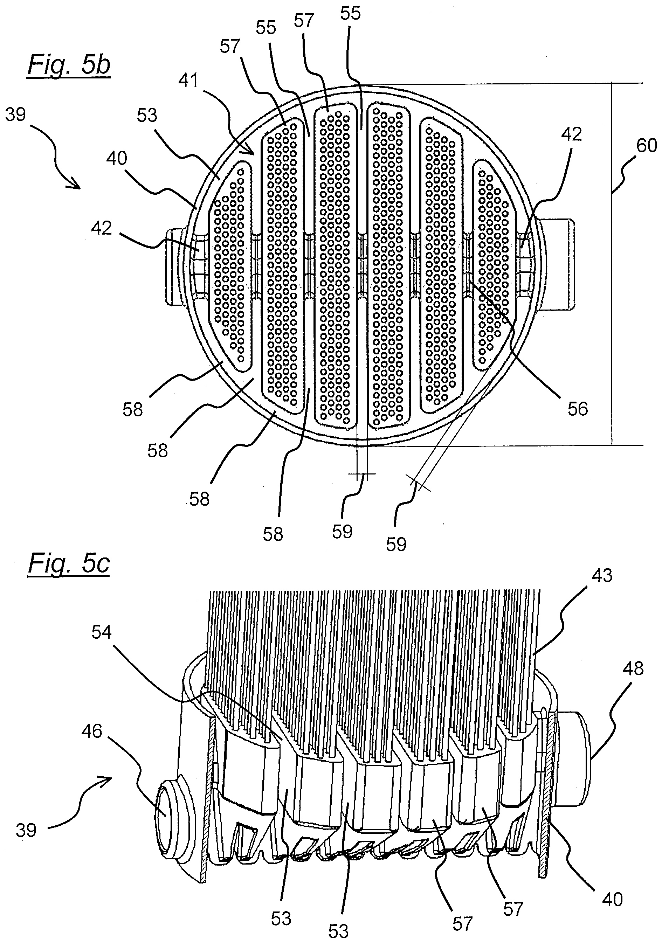

Figur 5b zeigt eine Draufsicht auf das Fußelement 39 des zweiten Membranfilters 36 und Figur 5c eine perspektivische Ansicht mit aufgeschnittenem Mantel 40. Zwischen dem Mantel 40 und dem Membranträger 41 weist das Fußelement 39 einen nach unten offenen Strömungsraum 53 zum Durchströmen der zu filtrierenden Flüssigkeit 37 auf, der oben einen Auslass 54 aufweist zum Auslassen der zu filtrierenden Flüssigkeit 37 in das Rohr 45.

Der Strömungsraum 53 hat Ausbuchtungen 55, die in den Membranträger 41 hineinragen bis zu einem Anker 56 des Membranträgers 41. Dadurch werden am Membranträger 41 sechs Finger 57 ausgebildet, die über den Anker 56 des Membranträgers 41 verbunden sind. Die beiden Ankerstellen 42 stehen in Verlängerung des Ankers 56, wobei durch die eine der Gaseinlass 46 und durch die andere der Permeatauslass 48 verläuft. Die beiden Ankerstellen 42 sind die einzigen Verbindungen des Membranträgers 41 mit dem Mantel 40. Die Bestückung des Membranträgers 41 mit den Hohlfasermembranen 43 erfolgt beim zweiten Membranfilter 36 nur im Bereich der Finger 57, wobei der Bereich zwischen den Fingern oberhalb des Ankers 56 aus fertigungstechnischen Gründen ausgespart bleibt. Die Hohlfasermembranen 43 des zweiten Membranfilters 36 sind gewebeverstärkt und haben einen Außendurchmesser von 2,5 mm.

Im Bereich des Ankers 56 gibt es im Fußelement 39 einen horizontalen Schnitt, in dem der Strömungsraum 53 zwei zusammenhängende Strömungskanäle 58 ausbildet, die im Ringspalt im äußeren Bereich der Finger 57 eine einheitliche Breite 59 von 6 mm aufweisen. Auch zwischen den Fingern 57 hat der Strömungskanal 58 die gleiche Breite 59 von 6 mm. Da die Kanten der Finger 57 aus strömungstechnischen Gesichtspunkten abgerundet sind, weisen die beiden Strömungskanäle 58 an den Kanten der Finger 57 eine geringfügig größere Breite als 6 mm auf. Insgesamt weisen die beiden Strömungskanäle 58 auf mehr als 80 % ihrer Länge die einheitliche Breite 59 von 6 mm auf.

Der Strömungsraum 53 grenzt in jedem horizontalen Schnitt sowohl an den Mantel 40 als auch an den Membranträger 41 und wird nur durch die beiden Ankerstellen 42 unterbrochen. Der Membranträger 41 verschließt das Fußelement 39 bis auf den Strömungsraum 53 vollständig, d.h. das Fußelement 39 weist außer dem Strömungsraum 53 keine weiteren Durchflusskanäle für die zu filtrierende Flüssigkeit 37 oder das Gas 38 auf.

Der Durchmesser 60 des Fußelementes 39 des zweiten Membranfilters 36 beträgt 208 mm.

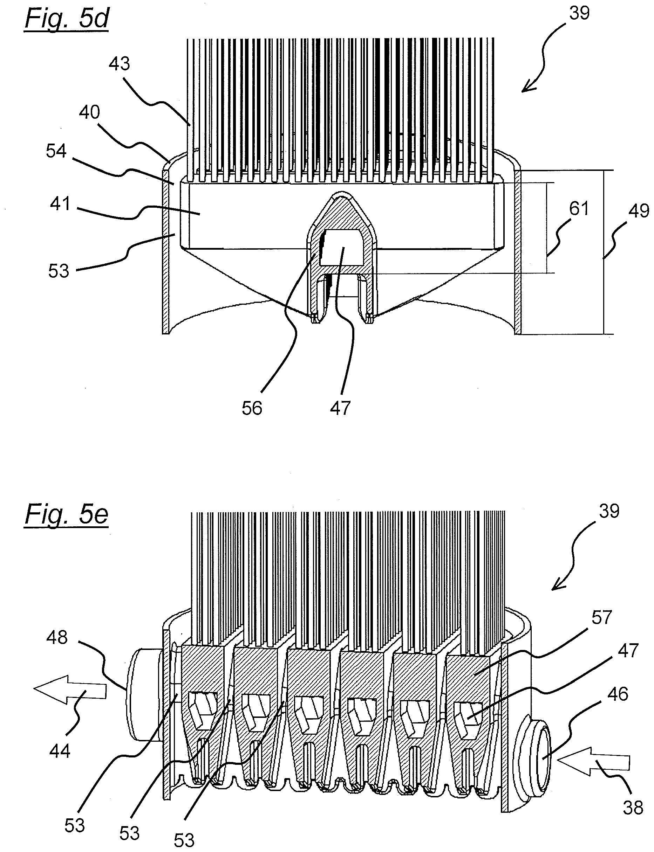

Figur 5d zeigt einen Schnitt durch das Fußelement 39 des zweiten Membranfilters 36, derart, dass der Anker 56 genau im Strömungsraum 53 zwischen zwei Fingern 57 geschnitten wird. Innerhalb des Ankers 56 befindet sich ein Teil des Permeatsammelraums 47. Der Strömungsraum 53 wird in vertikaler Richtung durch den Überschneidungsbereich der Höhe 49 des Fußelementes 39 und einer Höhe 61 des Membranträgers 41 begrenzt. An der Unterseite des Membranträges ist ein Gasverteilsystem 62 ausgebildet, dessen Höhe bei der Definition des Strömungsraums 53 unberücksichtigt bleibt. Der Strömungsraum 53 endet oben im Auslass 54.

Wie in Figur 5d und Figur 5e zu erkennen ist, sind die Finger 57 unten in beiden horizontalen Richtungen abgeschrägt, wodurch der Membranträger 41 eine sich nach unten verringernde, horizontale Querschnittsfläche aufweist. Dadurch bleiben in der zu filtrierenden Flüssigkeit 37 enthaltene Haare und faserige Verbindungen nicht an den Fingern 57 hängen sondern werden entlang der Schräge der Finger 57 in den Strömungsraum 53 abgestreift, durch diesen hindurchgespült und gelangen danach in den Bereich der Hohlfasermembranen 43 im Rohr 45. Da in diesem Bereich außer den oben einzeln verschlossenen Hohlfasermembranen 43 keine weiteren Einbauten vorhanden sind, an denen sich Haare oder faserige Verbindungen festsetzen können, und da zudem die Hohlfasermembranfasern 43 oben einzeln verschlossen sind, können Haare und faserige Verbindungen frei nach oben aus dem Membranfilter 36 ausgespült werden.

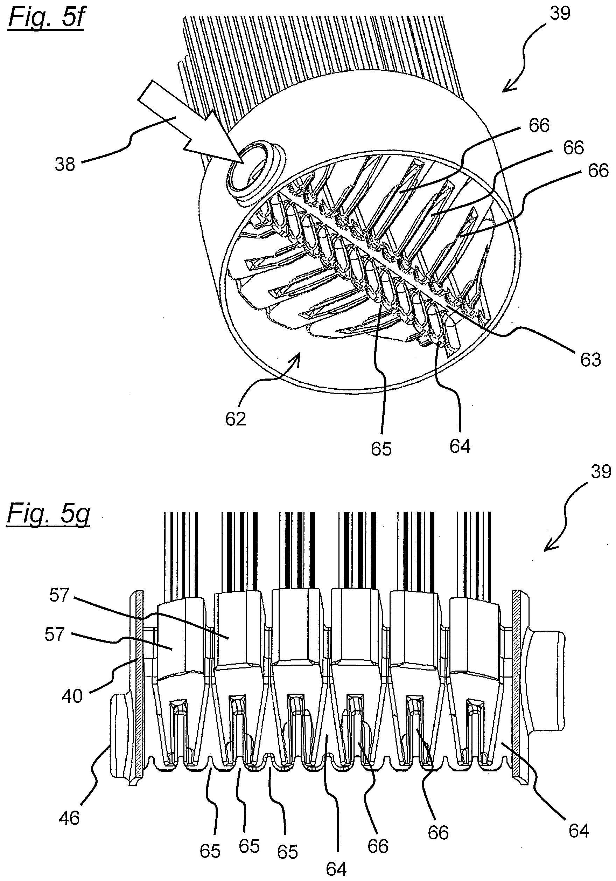

Figur 5f zeigt eine perspektivische Ansicht des Fußelementes 39 des zweiten Membranfilters 36 von schräg unten und Figur 5g eine Hälfte des Fußelementes 39 mit aufgeschnittenem Mantel 40.

Beim zweiten Membranfilter 36 weist das Fußelement 39 den Gaseinlass 46 auf. Dieser ist mit einem an der Unterseite des Membranträgers 41 ausgebildeten Gasverteilsystem 62 verbunden, das eine nach unten offene und oben geschlossene Wanne 63 aufweist, die eine Wandung 64 mit nach unten offenen, vertikalen Schlitzen 65 aufweist zum Verteilen des Gases 38 in die zu filtrierende Flüssigkeit 37. Die Breite der Wanne 63 entspricht der Breite des Ankers 56 und ist an dessen Unterseite ausgebildet. Der Gaseinlass 46 schließt direkt seitlich an die Wanne 63 an.

An jedem zweiten der Schlitze 65 ist außen an die Wanne 63 ein Gasleitkanal 66 angeschlossen, der an der Unterseite der Finger 57 ausgebildet ist, zum Weiterleiten des Gases 38 von der Wanne weg Richtung Mantel 40. Die anderen Schlitze 65, an die keine Gasleitkanäle 66 angeschlossen sind, münden jeweils zwischen zwei Fingern 57, bzw. bei den äußeren Fingern 57 zwischen diesen und dem Mantel 40 auf der Außenseite des Ankers 56. Somit weist die Wanne 63 auf jeder ihrer beiden Längsseiten eine Wandung 64 mit jeweils 13 Schlitzen 65 auf. Die Schlitze 65 werden nach unten breiter, um auch größere Schwankungen in der zugeführten Menge an Gas 38 kompensieren zu können.

Die Breite der Schlitze 65 und damit auch ihre Querschnittsfläche sind unterschiedlich groß. Dadurch wird die durch die Schlitze 65 strömende Menge des Gases 38 an die mit Gas 38 zu spülende Oberfläche der Hohlfasermembranen 43 angepasst. Dementsprechend weisen die Schlitze 65 unterhalb der längeren Finger 57 in der Mitte des Fußelementes 39 breitere Schlitze 65 auf als die äußeren Schlitze 65 unterhalb der kürzeren Finger 57. Die schmalsten Schlitze 65 sind diejenigen, die zwischen den Fingern 57 münden. Durch die Ausgestaltung des Gasverteilsystems 62 mit Schlitzen 65 und Gasleitkanälen 66 umströmt das Gas 38 den Membranträger 41 nach dem Einströmen in die zu filtrierende Flüssigkeit 37.

Das Fußelement 39 ist vom Gaseinlass 46 durch die Wanne 63, durch die Schlitze 65 und durch den Strömungsraum 53 bis zum Auslass 54 durchströmbar. Der Membranträger 41 verschließt das Fußelement 39 bis auf den Strömungsraum 53 nicht nur für die Durchströmung der zu filtrierenden Flüssigkeit 37 sondern auch für die Durchströmung des Gases 38.

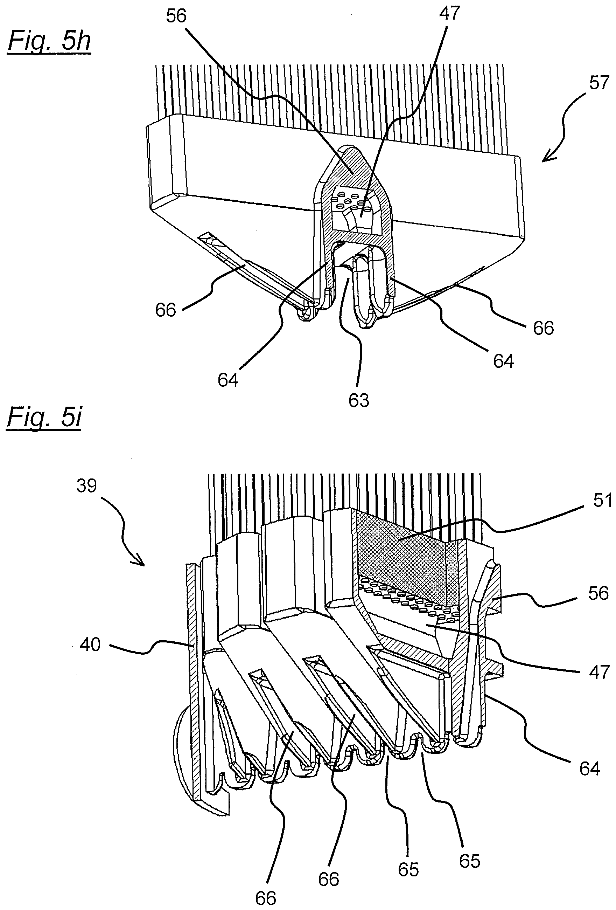

Figur 5h zeigt nur einen der Finger 57 des zweiten Membranfilters 36. Dabei ist im Schnitt der Anker 56 zu sehen und die auf dessen Unterseite ausgebildete Wanne 63. Zudem sind die auf der Unterseite des Fingers 57 zu beiden Seiten der Wanne 63 verlaufenden Gasleitkanäle 66 zu erkennen.

Figur 5i zeigt einen Schnitt durch den Gasleitkanal 66 in einem Ausschnitt des Fußelementes 39 des zweiten Membranfilters 36. Hierbei ist zu erkennen, dass die Gasleitkanäle 66 vertikal nach oben versetzt an die Schlitze 65 anschließen.

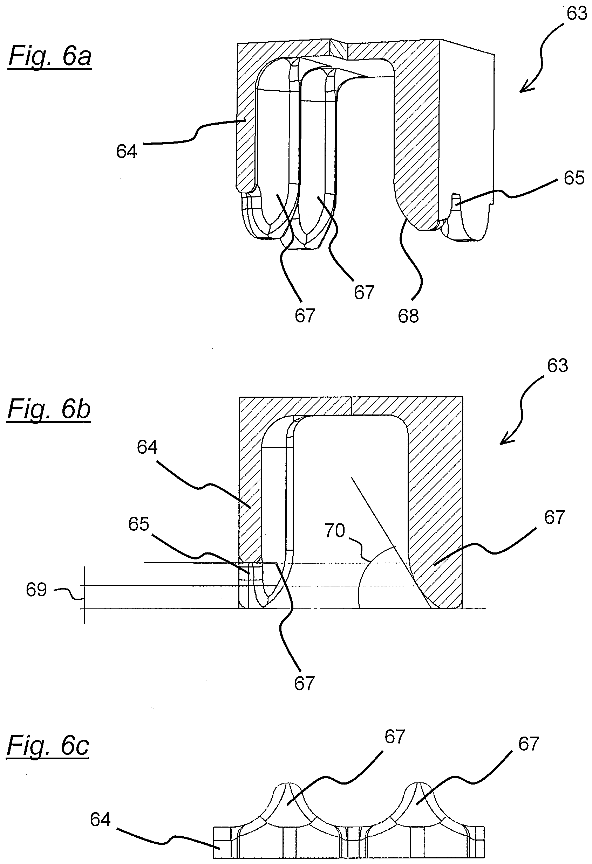

Die Figuren 6a bis 6c zeigen Ansichten und Schnitte von Teilen der Wanne 63 des zweiten Membranfilters 36.

Die Wanne 63 weist innen jeweils mittig zwischen benachbarten Schlitzen 65 orthogonal zur Wandung 64 verlaufende vertikale Rippen 67 auf. Jede Rippe 67 weist unten eine Verjüngung auf, die auf die Wandung 64 zuläuft und somit eine schräge, bzw. abgerundete Innenkante 68 der Wanne 63 ausbildet.

Geometrisch weist die Wanne 63 jeweils zwischen benachbarten Schlitzen 65 in einem vertikalen Schnitt, der in diesem Fall orthogonal zur Wandung 64 durch die Rippe 67 verläuft, eine Innenkante 68 auf, die mindestens im Bereich einer unteren Hälfte 69 der Schlitze 65 in jedem Punkt einen Winkel 70 zur Horizontalen von kleiner als 60°, auf Höhe der Hälfte 69 der Schlitze 65 von 58° aufweist.

Der nicht dargestellte Filtrationsbetrieb des zweiten Membranfilters 36 unterscheidet sich vom Filtrationsbetrieb des ersten Membranfilters 1 folgendermaßen:

Das Gas 38 strömt durch den Gaseinlass 46 in die Wanne 63 ein und füllt diese und die Schlitze 65 bis zu einem Teil der Höhe der Schlitze 65 mit einem Gaspolster. Aus diesem strömt das Gas 38 durch die Schlitze 65 seitlich nach außen aus der Wanne 63 und dabei an mehreren Stellen unterhalb des Membranträgers 41 in die zu filtrierende Flüssigkeit 37. Das Gas 38 strömt dabei aus den Schlitzen 65 zum einen in Ausbuchtungen 55 des Strömungsraums 53 zwischen jeweils zwei Fingern 57 und zum anderen aus den Schlitzen 65 unterhalb der Finger 57 in die Gasleikanäle 66. Über diese gelangt das Gas 38 nach außen weiter weg von der Wanne 63 in den Außenbereich des Membranfilters 36.

Beim seitlichen Durchströmen durch die Schlitze 65 wird eine parallel zur seitlichen Gasströmung gerichtete Flüssigkeitsströmung an der Phasengrenze unterhalb des Gaspolsters erzeugt, die die Innenkante 68 der Rippe 67 anströmt. Aufgrund des Winkels 70 dieser jeweils zwischen zwei Schlitzen 65 gelegenen Innenkante 68 der Wanne 63 können Haare und faserige Verbindungen beim Anströmen der Innenkante 68 abgestreift werden, wodurch die Verblockungsneigung des Membranfilters 36 deutlich reduziert wird.

Nach dem Eintreten des Gases in die zu filtrierende Flüssigkeit 37 wird der Membranträger 41 vom Gas 38 und der Flüssigkeit 37 umströmt, bevor das Gemisch aus Gas 38 und Flüssigkeit 37 die oben im Membranträger 41 befestigten Hohlfasermembranen 43 umströmt. Aufgrund der hohen Scherkraft der Zweiphasenströmung werden die Hohlfasermembranen 43 und der Membranträger 41 außen gespült.

Das Fußelement 39 wird von dem Gas 38 ausgehend vom Gaseinlass 46 durch die Wanne 63, durch die Schlitze 65 und durch den Strömungsraum 53 bis zum Auslass 54 durchströmt. Da der Strömungsraum 53 stets zwischen Mantel 40 und Membranträger 41 liegt und zudem über die Ausbuchtungen 55 auch in den inneren Bereich des Membranfilters 36 hineinragt, wird auf diese Art und Weise eine über den gesamten Querschnitt gleichmäßige Begasung des Membranfilters 36 erreicht unter Vermeidung der Durchströmung von kleinen parallel geschalteten Strömungsräumen. Dadurch wird insgesamt die Verblockungsneigung des Membranfilters 36 im Vergleich zum Stand der Technik reduziert.

Auch der zweite Membranfilter 36 kann im getauchten Betrieb oder trocken aufgestellt betrieben werden.

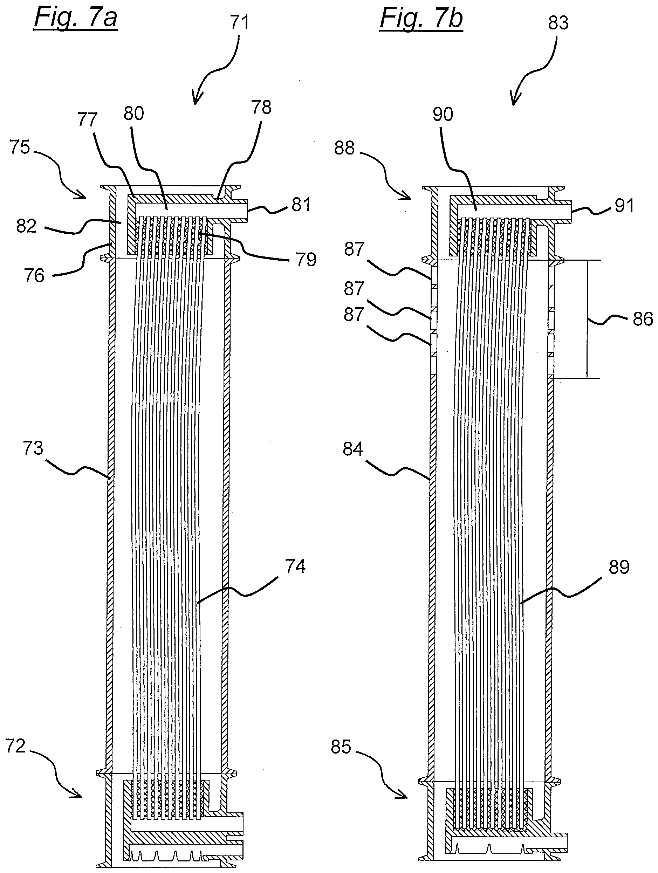

Die Figuren 7a bis 7d zeigen weitere Varianten erfindungsgemäßer Membranfilter mit einem Fußelement und einem Kopfelement.

Figur 7a zeigt einen dritten erfindungsgemäßen Membranfilter 71. Dieser unterscheidet sich von dem ersten Membranfilter 1 dadurch, dass an ein Fußelement 72 oben ein geschlossenes Rohr 73 anschießt, das Hohlfasermembranen 74 umgibt und das oben an ein Kopfelement 75 anschließt. Das Kopfelement 75 hat einen Mantel 76 und einen darin befindlichen Membranträger 77, der mit dem Mantel 76 nur über eine Ankerstelle 78 verbunden ist. Im Kopfelement 75 sind die Hohlfasermembranen 74 oben über eine Harzschicht 79 abdichtend zur zu filtrierenden Flüssigkeit mit ihren Lumen offen eingegossen und befestigt.

Das Kopfelement 75 weist einen Permeatsammelraum 80 auf, der mit den Lumen der Hohlfasermembranen 74 strömungstechnisch verbunden ist, zum Sammeln des Permeates und einen Permeatauslass 81 zum Ablassen des Permeates.

Ferner weist das Kopfelement 75 einen zweiten Strömungsraum 82 auf zum Durchströmen des Gases und der zu filtrierenden Flüssigkeit und Ausströmen aus dem Kopfelement 75. Der dritte Membranfilter 71 kann im Tauchbetrieb und im trocken aufgestellten Betrieb eingesetzt werden.

Figur 7b zeigt einen vierten erfindungsgemäßen Membranfilter 83. Dieser unterscheidet sich vom dritten Membranfilter 71 dadurch, dass an ein Rohr 84, das oben an ein Fußelement 85 anschließt, oben zunächst ein Rohraufsatz 86 mit Öffnungen 87 anschließt zum seitlichen Ausströmen eines Teils des Gases und der zu filtrierenden Flüssigkeit aus dem Rohr 84. Der Rohraufsatz 86 und das Rohr 84 bestehen beim vierten Membranfilter 83 aus einem Teil. An den Rohraufsatz 86 schließt oben ein Kopfelement 88 an, das die gleichen Details aufweist wie das Kopfelement 75 des dritten Membranfilters 71. Ein weiterer Unterschied zum dritten Membranfilter 71 bildet das Fußelement 85, das keinen Permeatsammelraum aufweist, d.h. die Hohlfasermembranen 89 sind unten verschlossen im Fußelement 85 eingeharzt und befestigt. Das in den Hohlfasermembranen 89 entstehende Permeat strömt nur in den Permeatsammelraum 90 des Kopfelementes 88, wird dort gesammelt und strömt über einen Permeatauslass 91 aus dem vierten Membranfilter 83. Dieser kann aufgrund der Öffnungen 87 im Rohraufsatz 86 nur im Tauchbetrieb eingesetzt werden.

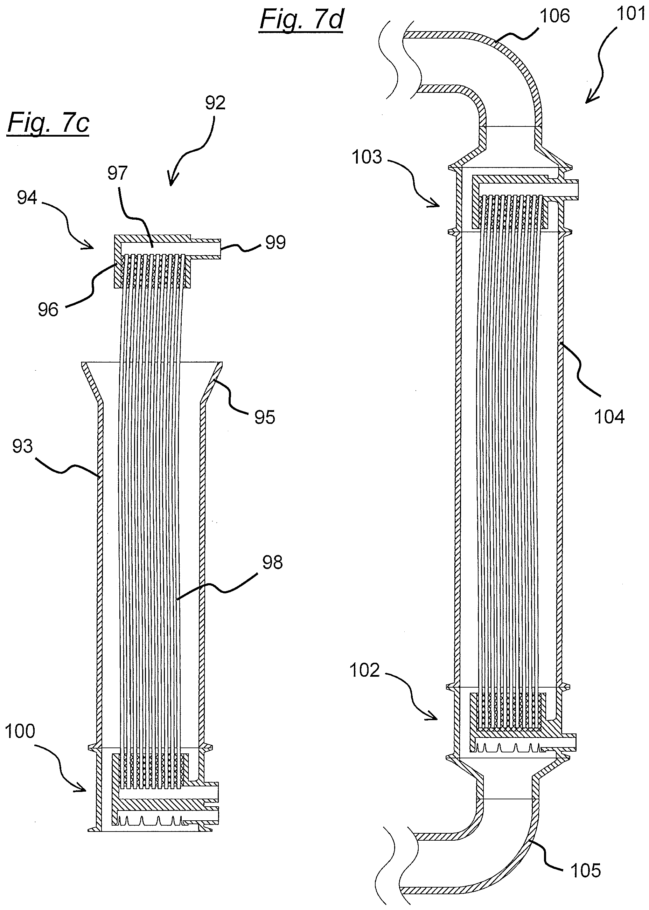

Figur 7c zeigt einen fünften erfindungsgemäßen Membranfilter 92. Dieser unterscheidet sich vom dritten Membranfilter 71 dadurch, dass das Rohr 93 nicht bis zum Kopfelement 94 geführt ist, sondern schon vorher mit einer Rohrerweiterung 95 oben endet. Das Kopfelement 94 ist somit nicht mit dem Rohr 93 verbunden und ist dementsprechend auch nicht durchströmbar für die zu filtrierende Flüssigkeit und das Gas gestaltet. Es weist daher nur einen Membranträger 96 mit darin befestigten, zu einem Permeatsammelraum 97 hin offen eingeharzten Hohlfasermembranen 98 und einen an den Permeatsammelraum 97 anschließenden Permeatauslass 99 auf zum Sammeln und Abführen eines Teils des entstehenden Permeates aus den Hohlfasermembranen 98. Der andere Teil des Permeates wird aus einem zu dem des dritten Membranfilters 71 identischen Fußelement 100 abgeführt. Auch der fünfte Membranfilter 92 kann aufgrund der offenen Gestaltung zwischen dem Rohr 93 und dem Kopfelement 94 nur im Tauchbetrieb eingesetzt werden.

Figur 7d zeigt einen sechsten erfindungsgemäßen Membranfilter 101. Dieser weist ein Fußelement 102 und ein Kopfelement 103 auf, die identisch sind zu denen des vierten Membranfilters 83 und die über ein durchgehend geschlossenes Rohr 104 verbunden sind. Der sechste erfindungsgemäße Membranfilter 101 ist für den trocken aufgestellten Betrieb konzipiert. Dabei wird an das Fußelement 102 eine erste Flüssigkeitsleitung 105 angeschlossen zum Einlassen der zu filtrierenden Flüssigkeit von unten in das Fußelement 102. Weiterhin schließt an das Kopfelement 103 eine zweite Flüssigkeitsleitung 106 oben an zum Auslassen der Flüssigkeit und des Gases aus dem sechsten Membranfilter 101.

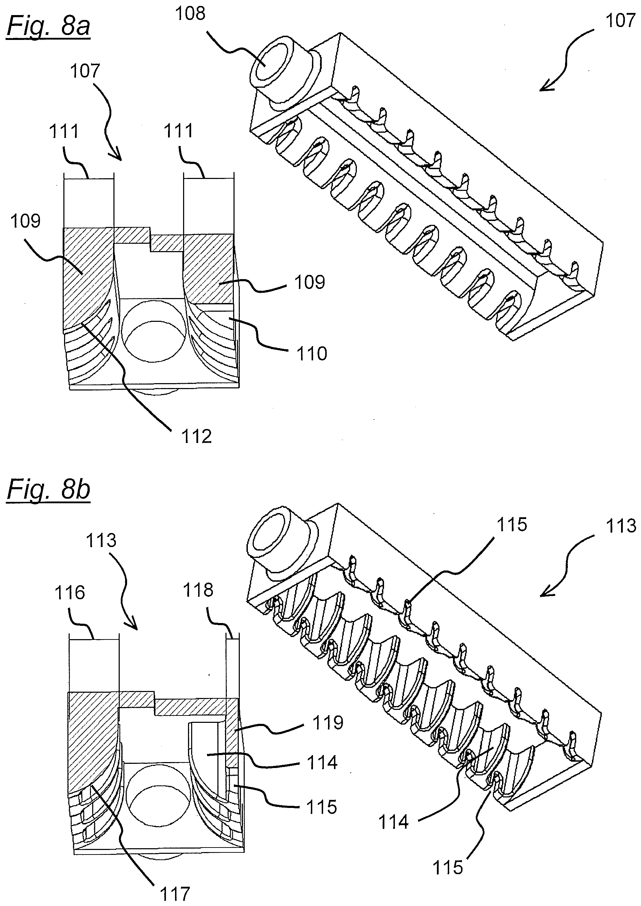

Die Figuren 8a und 8b zeigen separate Wannen von zwei weiteren erfindungsgemäßen Membranfiltern, die nicht mit einem Membranträger verbunden sind.

Figur 8a zeigt eine Wanne 107 eines sonst nicht weiter dargestellten siebten erfindungsgemäßen Membranfilters mit einem Gaseinlass 108, der seitlich an die Wanne 107 anschließt, zum Einströmen eines Gases in die Wanne 107. Die Wanne 107 weist eine Wandung 109 auf mit vertikalen Schlitzen 110 zum Ausströmen des Gases aus der Wanne 107. In Figur 8a ist zudem ein Schnitt durch die Wanne 107 dargestellt, der auf der linken Seite mittig zwischen zwei Schlitzen 110 und auf der rechten Seite genau durch einen der Schlitze 110 verläuft. Die Wandung 109 weist sowohl im Bereich der Schlitze 110 als auch im Bereich jeweils zwischen zwei Schlitzen 110 oben eine einheitliche Dicke 111 von 15 mm auf. In dem auf der linken Seite dargestellten vertikalen Schnitt durch die Wanne 107 zwischen zwei Schlitzen 110 weist die Wanne eine Innenkante 112 auf, die im Bereich einer unteren Hälfte der Schlitze 110 in jedem Punkt einen Winkel zur Horizontalen von kleiner als 60° aufweist zum Abstreifen von in einer zu filtrierenden Flüssigkeit enthaltenen Haaren und faserigen Verbindungen.

Figur 8b zeigt eine Wanne 113 eines achten erfindungsgemäßen Membranfilters, die sich von der Wanne 107 nur dadurch unterscheidet, dass von der dicken Wandung 109 der Wanne 107 nur noch Rippen 114 stehengeblieben sind. Die Rippen 114 befinden sich jeweils mittig zwischen benachbarten Schlitzen 115 und haben eine Ausdehnung 116 in die Wanne 113 hinein, die nach unten abnimmt. Die Ausdehnung 116 der Rippen 114 entspricht der Dicke 111 der Wandung 109 der Wanne 107 des siebten Membranfilters. In einem dargestellten Schnitt durch die Rippe 114, weist diese und damit auch die Wanne 113 eine Innenkante 117 auf, die im Bereich einer unteren Hälfte der Schlitze 115 in jedem Punkt einen Winkel zur Horizontalen von kleiner als 60° aufweist zum Abstreifen von in einer zu filtrierenden Flüssigkeit enthaltenen Haaren und faserigen Verbindungen. Damit übernimmt im achten erfindungsgemäßen Membranfilter die Rippe 114 die Funktion der dicken Wandung 109 des siebten erfindungsgemäßen Membranfilters. Die Dicke 118 der Wandung 119 des achten erfindungsgemäßen Membranfilters ist dadurch deutlich reduziert, wodurch für eine Gestaltung der Wanne 113 als Spritzgussteil ungünstige Materialanhäufungen vermieden werden.

In einer alternativen Ausführung des achten Membranfilters können die Rippen der gegenüberliegenden Seiten der Wanne auch versetzt zueinander angeordnet sein, so dass auch schmalere Wannen realisierbar werden. Dies wirkt sich allerdings bei längeren Wannen nachteilig auf deren Druckverlust und damit auf eine gleichmäßige Längsdurchströmung des Gases aus.

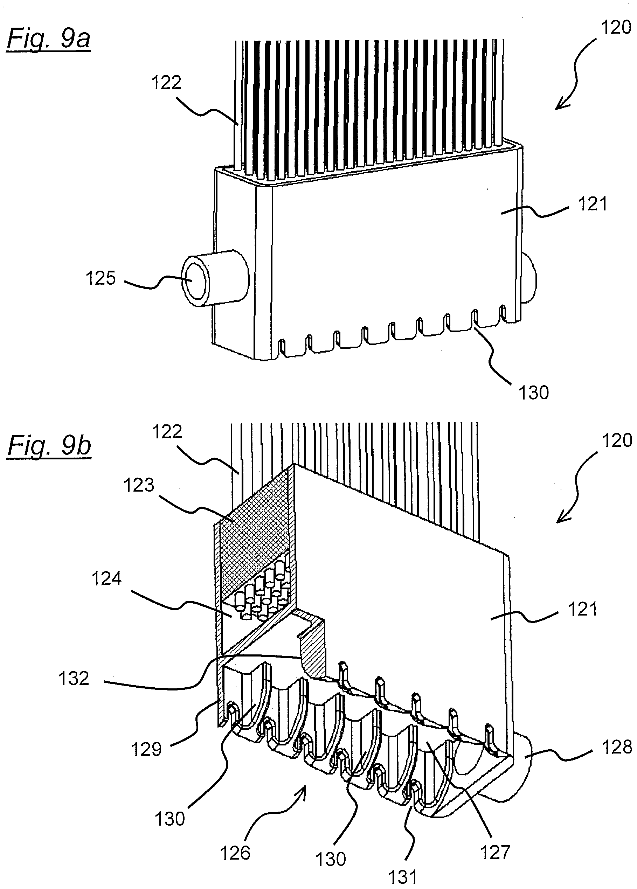

Die Figuren 9a und 9b zeigen eine Ansicht und einen Schnitt eines Fußelementes 120 eines neunten erfindungsgemäßen Membranfilters. Dieses weist einen rechteckigen Membranträger 121 auf, an dem oben Membranen 122 in einer Harzschicht 123 eingegossen befestigt sind, mit deren Hilfe ein flüssiges Permeat aus einer zu filtrierenden Flüssigkeit filtrierbar ist. Der Membranträger 121 weist zudem einen Permeatsammelraum 124 auf, an den die Membranen 122 permeatseitig offen angeschlossen sind, und einen Permeatauslass 125 zum Auslassen des Permeats aus dem Permeatsammelraum 124. Unterhalb des Membranträgers 121 ist ein Gasverteilsystem 126 angeordnet, das in diesem Fall an der Unterseite des Membranträgers 121 ausgebildet ist. Somit sind der Membranträger 121 und das Gasverteilsystem 126 ein Bauteil. Das Gasverteilsystem 126 weist eine nach unten offene und oben geschlossene Wanne 127 auf, in die seitlich ein Gaseinlass 128 mündet. Die Wanne 127 weist zudem eine Wandung 129 mit nach unten offenen vertikalen Schlitzen 130 auf zum Verteilen eines Gases in die zu filtrierende Flüssigkeit. Die Wandung 129 weist jeweils mittig zwischen benachbarten Schlitzen 130 eine orthogonal zur Wandung 129 verlaufende vertikale Rippe 131 auf, deren Ausdehnung in die Wanne 127 hinein nach unten abnimmt. Somit weist die Rippe 131 in einem orthogonalen Schnitt zur Wandung eine Innenkante 132 der Wandung auf, die im Bereich einer unteren Hälfte der Schlitze in jedem Punkt einen Winkel zur Horizontalen von kleiner als 60° aufweist, zum Abstreifen von in der zu filtrierenden Flüssigkeit enthaltenen Haaren und faserigen Verbindungen.

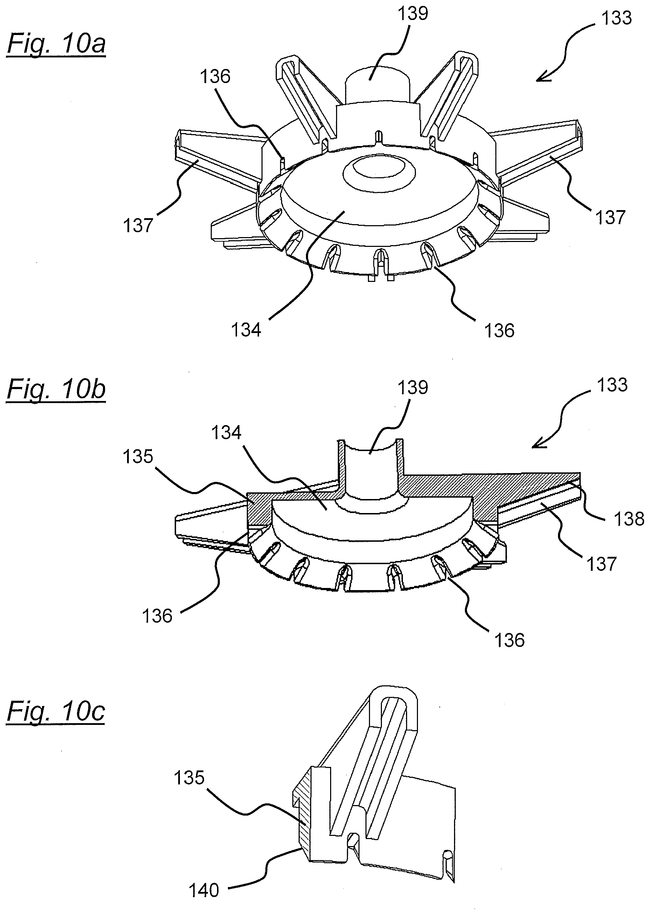

Die Figuren 10a bis 10c zeigen ein separates Gasverteilsystem 133 eines zehnten erfindungsgemäßen Membranfilters. Das Gasverteilsystem 133 weist eine runde Wanne 134 auf, die nach unten offen und oben geschlossen ist. Die Wanne 134 weist eine Wandung 135 auf mit nach unten offenen, vertikalen Schlitzen 136 zum Ausströmen eines Gases aus der Wanne 134. Das Gasverteilsystem 133 weist zudem nach unten offene Gasleitkanäle 137 auf, die an jeden zweiten der Schlitze 136 vertikal nach oben versetzt außen anschließen. Die Gasleitkanäle 137 weisen oben einen Boden 138 auf, der vom Anschluss an die Wanne 134 ausgehend nach oben ansteigt. Das Gasverteilsystem 133 weist zudem einen Gaseinlass 139 auf, der von oben durch die Wanne 134 an diese anschließt.

Figur 10c zeigt einen Schnitt durch die Wandung 135 der Wanne 134. In diesem Schnitt weist die Wanne 134 eine unten abgeschrägte Innenkante 140 auf, die im Bereich der Höhe der Schlitze 136 einen Winkel zur Horizontalen von 40° aufweist.

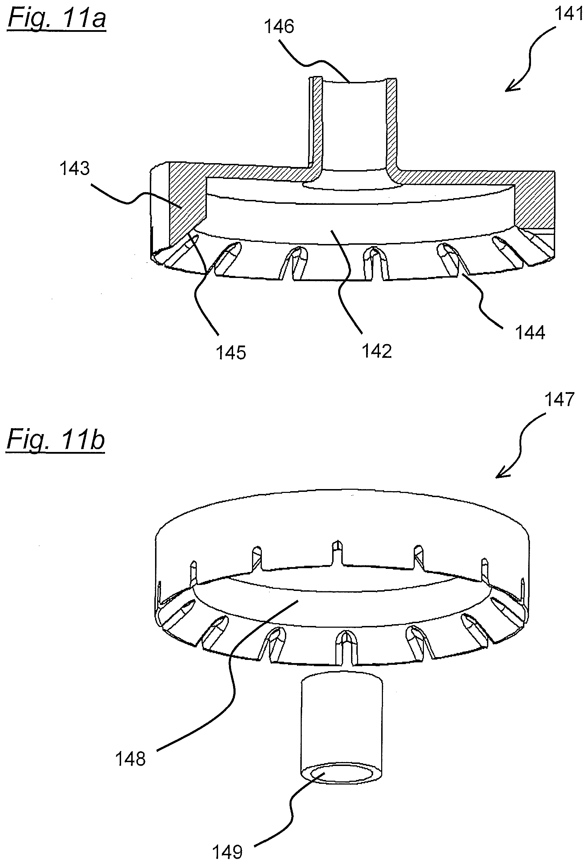

Die Figuren 11a und 11b zeigen Gasverteilsysteme von zwei weiteren erfindungsgemäßen Membranfiltern. Figur 11a zeigt einen Schnitt durch ein Gasverteilsystem 141 eines elften erfindungsgemäßen Membranfilters. Dieses weist eine nach unten offene und oben geschlossene runde Wanne 142 auf. Die Wanne 142 weist eine Wandung 143 mit nach unten offenen vertikalen Schlitzen 144 auf zum Ausströmen eines Gases aus der Wanne 142. In einem Schnitt zwischen benachbarten Schlitzen 144 weist die Wanne 142 eine Innenkante 145 auf, die im Bereich einer Höhe der Schlitze 144 einen Winkel zur Horizontalen von 40° aufweist. Das Gasverteilsystem 141 weist einen Gaseinlass 146 auf, der von oben durch die Wanne 142 an diese anschließt.

Die Figur 11b zeigt ein Gasverteilsystem 147 eines zwölften erfindungsgemäßen Membranfilters, das sich von dem des elften Membranfilters nur dadurch unterscheidet, dass der Gaseinlass 149 nicht mit einer Wanne 148 verbunden ist, sondern unterhalb der Wanne 148 als Rohrstutzen angeordnet ist zum Einlassen eines Gases in die Wanne 148.

### In den Figuren sind

- 1: Membranfilter
- 2: Fußelement
- 3: Mantel
- 4: Membranträger
- 5: Hohlfasermembran
- 6: Rohr
- 7: oberes Ende
- 8: Länge
- 9: Harzschicht
- 10: Höhe Membranfilter
- 11: Höhe Fußelement
- 12: Höhe Membranträger
- 13: Gaseinlass
- 14: Permeatauslass
- 15: Ankerstelle
- 16: Strömungsbereich
- 17: Auslass
- 18: Gasverteilsystem
- 19: Wanne
- 20: Wandung
- 21: vertikaler Schlitz
- 22: Innenkante
- 23: untere Hälfte
- 24: Winkel
- 25: Permeatsammelraum
- 26: Gas
- 27: Gaspolster
- 28: zu filtrierende Flüssigkeit
- 29: Permeat
- 30: Oberfläche
- 31: Gaszuführleitung
- 32: Drossel
- 33: Permeatleitung
- 34: erste Flüssigkeitsleitung
- 35: zweite Flüssigkeitsleitung
- 36: Membranfilter
- 37: zu filtrierende Flüssigkeit
- 38: Gas
- 39: Fußelement
- 40: Mantel
- 41: Membranträger
- 42: Ankerstelle
- 43: Hohlfasermembran
- 44: Permeat
- 45: Rohr
- 46: Gaseinlass
- 47: Permeatsammelraum
- 48: Permeatauslass
- 49: Höhe Fußelement
- 50: Höhe Membranfilter
- 51: Harzschicht
- 52: oberes Ende
- 53: Strömungsraum
- 54: Auslass
- 55: Ausbuchtung
- 56: Anker
- 57: Finger
- 58: Strömungskanal
- 59: Breite
- 60: Durchmesser
- 61: Höhe des Membranträgers
- 62: Gasverteilsystem
- 63: Wanne
- 64: Wandung
- 65: vertikaler Schlitz
- 66: Gasleitkanal
- 67: Rippe
- 68: Innenkante
- 69: untere Hälfte
- 70: Winkel
- 71: Membranfilter
- 72: Fußelement
- 73: Mantel
- 74: Hohlfasermembran
- 75: Kopfelement
- 76: Mantel
- 77: Membranträger
- 78: Ankerstelle
- 79: Harzschicht
- 80: Permeatsammelraum
- 81: Permeatauslass
- 82: Strömungsraum
- 83: Membranfilter
- 84: Rohr
- 85: Fußelement
- 86: Rohraufsatz
- 87: Öffnung
- 88: Kopfelement
- 89: Hohlfasermembran
- 90: Permeatsammelraum
- 91: Permeatauslass
- 92: Membranfilter
- 93: Rohr
- 94: Kopfelement
- 95: Rohrerweiterung
- 96: Membranträger
- 97: Permeatsammelraum
- 98: Hohlfasermembran
- 99: Permeatauslass
- 100: Fußelement
- 101: Membranfilter
- 102: Fußelement
- 103: Kopfelement
- 104: Rohr
- 105: erste Flüssigkeitsleitung
- 106: zweite Flüssigkeitsleitung
- 107: Wanne
- 108: Gaseinlass
- 109: Wandung
- 110: Schlitz
- 111: Dicke
- 112: Innenkante
- 113: Wanne
- 114: Rippe
- 115: Schlitz
- 116: Ausdehnung
- 117: Innenkante
- 118: Dicke
- 119: Wandung
- 120: Fußelement
- 121: Membranträger
- 122: Membran
- 123: Harzschicht
- 124: Permeatsammelraum
- 125: Permeatauslass
- 126: Gasverteilsystem
- 127: Wanne
- 128: Gaseinlass
- 129: Wandung
- 130: Schlitz
- 131: Rippe
- 132: Innenkante
- 133: Gasverteilsystem
- 134: Wanne
- 135: Wandung
- 136: Schlitz
- 137: Gasleitkanal
- 138: Boden
- 139: Gaseinlass
- 140: Innenkante
- 141: Gasverteilsystem
- 142: Wanne
- 143: Wandung
- 144: Schlitz
- 145: Innenkante
- 146: Gaseinlass
- 147: Gasverteilsystem
- 148: Wanne
- 149: Gaseinlass

## Patentansprüche

1. Membranfilter (1, 36, 71, 83, 92, 101) zum Filtern einer zu filtrierenden Flüssigkeit (28, 37) mit
a. mindestens einem Membranträger (4, 41, 77, 96, 121), an dem Membranen (122) befestigt sind, mit deren Hilfe ein flüssiges Permeat (29, 44) aus der Flüssigkeit filtrierbar ist, und der einen Permeatsammelraum (25, 47, 80, 90, 97, 124) aufweist, an den die Membranen (122) permeatseitig offen angeschlossen sind, und einen Permeatauslass (14, 48, 81) zum Auslassen des Permeates (29, 44) aus dem Permeatsammelraum (25, 47, 80, 90, 97, 124),
b. einem unterhalb des mindestens einen Membranträgers (4, 41, 77, 96, 121) angeordneten Gasverteilsystem (18, 62, 126, 133, 141, 147) mit mindestens einer nach unten offenen und oben geschlossenen Wanne (19, 63, 107, 113, 127, 134, 142, 148), die eine Wandung (20, 64, 109, 119, 129, 135, 143) mit nach unten offenen, vertikalen Schlitzen (21, 65, 110, 115, 130, 136, 144) aufweist zum Verteilen eines Gases (26, 38) in die Flüssigkeit und
c. mindestens einem Gaseinlass (13, 46, 108, 146, 149) in das Gasverteilsystem (18, 62, 126, 133, 141, 147),
***dadurch gekennzeichnet, dass***
d. die mindestens eine Wanne (19, 63, 107, 113, 127, 134, 142, 148) jeweils zwischen benachbarten Schlitzen (21, 65, 110, 115, 130, 136, 144) in mindestens einem vertikalen, orthogonal zur Wandung (20, 64, 109, 119, 129, 135, 143) verlaufenden Schnitt eine Innenkante (112, 117, 132, 140, 145) aufweist, die mindestens im Bereich einer unteren Hälfte (23, 69) der Schlitze (21, 65, 110, 115, 130, 136, 144) in jedem Punkt einen Winkel zur Horizontalen von kleiner als 60° aufweist.

2. Membranfilter (1, 36, 71, 83, 92, 101) nach Anspruch 1, ***dadurch gekennzeichnet, dass*** das Gasverteilsystem (18, 62, 126, 133, 141, 147) an einer Unterseite des mindestens einen Membranträgers (4, 41, 77, 96, 121) ausgebildet ist.

3. Membranfilter (1, 36, 71, 83, 92, 101) nach einem der Ansprüche 1 oder 2, ***dadurch gekennzeichnet, dass*** die mindestens eine Wanne (19, 63, 107, 113, 127, 134, 142, 148) jeweils zwischen benachbarten Schlitzen (21, 65, 110, 115, 130, 136, 144) mindestens eine von der Wandung (109, 119, 129, 135, 143) nach innen verlaufende vertikale Rippe (67, 114, 131) aufweist, deren Ausdehnung in die mindestens eine Wanne (19, 63, 107, 113, 127, 134, 142, 148) hinein nach unten abnimmt.

4. Membranfilter (1, 36, 71, 83, 92, 101) nach einem der vorgenannten Ansprüche, ***dadurch gekennzeichnet, dass*** das Gasverteilsystem (18, 62, 126, 133, 141, 147) nach unten offene Gasleitkanäle (66, 137) aufweist, die zumindest an einen Teil der Schlitze (21, 65, 110, 115, 130, 136, 144) außen anschließen zur Weiterleitung und Verteilung des Gases (26, 38) von der mindestens einen Wanne (19, 63, 107, 113, 127, 134, 142, 148) weg.

5. Membranfilter (1, 36, 71, 83, 92, 101) nach dem vorgenannten Anspruch, ***dadurch gekennzeichnet, dass*** die Gasleitkanäle (66, 137) vertikal nach oben versetzt an die Schlitze (21, 65, 110, 115, 130, 136, 144) anschließen.

6. Membranfilter (1, 36, 71, 83, 92, 101) nach einem der vorgenannten Ansprüche, ***dadurch gekennzeichnet, dass*** die Schlitze (21, 65, 110, 115, 130, 136, 144) nach unten breiter werden.

7. Membranfilter (1, 36, 71, 83, 92, 101) nach einem der vorgenannten Ansprüche, ***dadurch gekennzeichnet, dass*** die Schlitze (21, 65, 110, 115, 130, 136, 144) unterschiedlich große Querschnittsflächen aufweisen.

8. Membranfilter (1, 36, 71, 83, 92, 101) nach einem der vorgenannten Ansprüche, ***dadurch gekennzeichnet, dass*** der mindestens eine Gaseinlass (13, 46, 108, 146, 149) an die mindestens eine Wanne (19, 63, 107, 113, 127, 134, 142, 148) seitlich anschließt.

9. Verfahren zum Filtern einer Flüssigkeit in einem Membranfilter (1, 36, 71, 83, 92, 101) mit mindestens einem Membranträger (4, 41, 77, 96, 121), mindestens einem Gaseinlass (13, 46, 108, 146, 149) und einem Gasverteilsystem (18, 62, 126, 133, 141, 147) mit mindestens einer nach unten offenen und oben geschlossenen Wanne (19, 63, 107, 113, 127, 134, 142, 148), die eine Wandung (109, 119, 129, 135, 143) mit nach unten offenen Schlitzen (21, 65, 110, 115, 130, 136, 144) aufweist, wobei
a. ein Gas (26, 38) durch den mindestens einen Gaseinlass (13, 46, 108, 146, 149) in die mindestens eine Wanne (19, 63, 107, 113, 127, 134, 142, 148) einströmt,
b. das Gas (26, 38) die mindestens eine Wanne (19, 63, 107, 113, 127, 134, 142, 148) und die Schlitze (21, 65, 110, 115, 130, 136, 144) bis zu einem Teil einer Höhe der Schlitze (21, 65, 110, 115, 130, 136, 144) mit einem Gaspolster (27) füllt,
c. das Gas (26, 38) aus dem Gaspolster (27) durch die Schlitze (21, 65, 110, 115, 130, 136, 144) seitlich nach außen aus der mindestens einen Wanne (19, 63, 107, 113, 127, 134, 142, 148) ausströmt und dabei an mehreren Stellen unterhalb des mindestens einen Membranträgers (4, 41, 77, 96, 121) in die Flüssigkeit einströmt,
d. das Gas (26, 38) beim seitlichen Durchströmen durch die Schlitze (21, 65, 110, 115, 130, 136, 144) eine parallel zur seitlichen Gasströmung gerichtete Flüssigkeitsströmung an der Phasengrenze unterhalb des Gaspolsters (27) generiert,
e. das Gas (26, 38) in dem Membranfilter (1, 36, 71, 83, 92, 101) aufsteigt und dadurch eine Aufwärtsbewegung der Flüssigkeit in dem Membranfilter (1, 36, 71, 83, 92, 101) generiert und
f. die aufsteigende Flüssigkeit und das Gas (26, 38) den mindestens einen Membranträger (4, 41, 77, 96, 121) und daran befestigte Membranen (122) spülen,
***dadurch gekennzeichnet, dass***
g. die unterhalb des Gaspolsters (27) generierte Flüssigkeitsströmung jeweils zwischen benachbarten Schlitzen (21, 65, 110, 115, 130, 136, 144) in mindestens einem vertikalen, orthogonal zur Wandung (20, 64, 109, 119, 129, 135, 143) verlaufenden Schnitt eine Innenkante (112, 117, 132, 140, 145) der mindestens einen Wanne (19, 63, 107, 113, 127, 134, 142, 148) anströmt, die mindestens im Bereich einer unteren Hälfte (23, 69) der Schlitze (21, 65, 110, 115, 130, 136, 144) einen Winkel zur Horizontalen von kleiner als 60° aufweist.

10. Verfahren nach Anspruch 9, ***dadurch gekennzeichnet, dass*** das Gas (26, 38) nach Durchströmen von einigen der Schlitze (21, 65, 110, 115, 130, 136, 144) durch Gasleitkanäle (66, 137) in weiter von der mindestens einen Wanne (19, 63, 107, 113, 127, 134, 142, 148) nach außen entfernte Bereiche des Membranfilters (1, 36, 71, 83, 92, 101) strömt.

11. Verfahren nach Anspruch 9 oder 10, ***dadurch gekennzeichnet, dass*** das Gasverteilsystem (18, 62, 126, 133, 141, 147) an der Unterseite des mindestens einen Membranträgers (4, 41, 77, 96, 121) ausgebildet ist, und dass das Gas (26, 38) nach dem Einströmen in die Flüssigkeit den mindestens einen Membranträger (4, 41, 77, 96, 121) umströmt.

## Claims

1. A membrane filter (1, 36, 71, 83, 92, 101) for filtering a liquid (28, 37) to be filtered, comprising
a. at least one membrane carrier (4, 41, 77, 96, 121), on which membranes (122) are fastened, by means of which a liquid permeate (29, 44) can be filtered out of the liquid, wherein said membrane carrier features a permeate collection chamber (25, 47, 80, 90, 97, 124), to which the membranes (122) are openly connected on the permeate side, as well as a permeate outlet (14, 48, 81) for discharging the permeate (29, 44) from the permeate collection chamber (25, 47, 80, 90, 97, 124),
b. a gas distribution system (18, 62, 126, 133, 141, 147), which is arranged underneath the at least one membrane carrier (4, 41, 77, 96, 121) and comprises at least one trough (19, 63, 107, 113, 127, 134, 142, 148) that is open toward the bottom and closed on top, wherein said trough features a wall (20, 64, 109, 119, 129, 135, 143) with vertical slots (21, 65, 110, 115, 130, 136, 144), which are open toward the bottom, in order to distribute a gas (26, 38) into the liquid, and
c. at least one gas inlet (13, 46, 108, 146, 149) into the gas distribution system (18, 62, 126, 133, 141, 147),
***characterized in that***
d. the at least one trough (19, 63, 107, 113, 127, 134, 142, 148) respectively features an inner edge (112, 117, 132, 140, 145) between adjacent slots (21, 65, 110, 115, 130, 136, 144) in at least a vertical section extending orthogonal to the wall (20, 64, 109, 119, 129, 135, 143), wherein said inner edge includes at any point an angle of less than 60° with the horizontal line at least in the region of a lower half (23, 69) of the slots (21, 65, 110, 115, 130, 136, 144).

2. The membrane filter (1, 36, 71, 83, 92, 101) according to claim 1, ***characterized in that*** the gas distribution system (18, 62, 126, 133, 141, 147) is arranged on an underside of the at least one membrane carrier (4, 41, 77, 96, 121).

3. The membrane filter (1, 36, 71, 83, 92, 101) according to one of claims 1 or 2, ***characterized in that*** the at least one trough (19, 63, 107, 113, 127, 134, 142, 148) respectively features at least one rib (67, 114, 131), which extends inward from the wall (109, 119, 129, 135, 143), between adjacent slots (21, 65, 110, 115, 130, 136, 144), wherein the extent of said rib into the at least one trough (19, 63, 107, 113, 127, 134, 142, 148) decreases toward the bottom.

4. The membrane filter (1, 36, 71, 83, 92, 101) according to one of the preceding claims, ***characterized in that*** the gas distribution system (18, 62, 126, 133, 141, 147) features gas conduits (66, 137), which are open toward the bottom and connect to the outside of at least some of the slots (21, 65, 110, 115, 130, 136, 144), in order to convey and distribute the gas (26, 38) away from the at least one trough (19, 63, 107, 113, 127, 134, 142, 148).

5. The membrane filter (1, 36, 71, 83, 92, 101) according to the preceding claim, ***characterized in that*** the gas conduits (66, 137) connect to the slots (21, 65, 110, 115, 130, 136, 144) vertically offset toward the top.

6. The membrane filter (1, 36, 71, 83, 92, 101) according to one of the preceding claims, ***characterized in that*** the slots (21, 65, 110, 115, 130, 136, 144) become wider toward the bottom.

7. The membrane filter (1, 36, 71, 83, 92, 101) according to one of the preceding claims, ***characterized in that*** the slots (21, 65, 110, 115, 130, 136, 144) have differently sized cross-sectional areas.

8. The membrane filter (1, 36, 71, 83, 92, 101) according to one of the preceding claims, ***characterized in that*** the at least one gas inlet (13, 46, 108, 146, 149) laterally connects to the at least one trough (19, 63, 107, 113, 127, 134, 142, 148).

9. A method for filtering a liquid in a membrane filter (1, 36, 71, 83, 92, 101) comprising at least one membrane carrier (4, 41, 77, 96, 121), at least one gas inlet (13, 46, 108, 146, 149) and a gas distribution system (18, 62, 126, 133, 141, 147) with at least one trough (19, 63, 107, 113, 127, 134, 142, 148), which is open toward the bottom and closed on top and features a wall (109, 119, 129, 135, 143) with slots (21, 65, 110, 115, 130, 136, 144) that are open toward the bottom, wherein
a. a gas (26, 38) flows into the at least one trough (19, 63, 107, 113, 127, 134, 142, 148) through the at least one gas inlet (13, 46, 108, 146, 149),
b. the gas (26, 38) fills the at least one trough (19, 63, 107, 113, 127, 134, 142, 148) and the slots (21, 65, 110, 115, 130, 136, 144) up to part of a height of the slots (21, 65, 110, 115, 130, 136, 144) with a gas cushion (27),
c. the gas (26, 38) from the gas cushion (27) laterally flows out of the at least one trough (19, 63, 107, 113, 127, 134, 142, 148) through the slots (21, 65, 110, 115, 130, 136, 144) and thereby into the liquid at multiple locations underneath the at least one membrane carrier (4, 41, 77, 96, 121),
d. the gas (26, 38) generates a liquid flow, which is directed parallel to the lateral gas flow, at the phase boundary underneath the gas cushion (27) while it laterally flows through the slots (21, 65, 110, 115, 130, 136, 144),
e. the gas (26, 38) rises in the membrane filter (1, 36, 71, 83, 92, 101) and thereby generates an upward motion of the liquid in the membrane filter (1, 36, 71, 83, 92, 11), and
f. the rising liquid and the gas (26, 38) flush the at least one membrane carrier (4, 41, 77, 96, 121) and the membranes (122) fastened thereon, ***characterized in that***
g. the liquid flow generated underneath the gas cushion (27) respectively flows against an inner edge (112, 117, 132, 140, 145) of the at least one trough (19, 63, 107, 113, 127, 134, 142, 148) between adjacent slots (21, 65, 110, 115, 130, 136, 144) in at least a vertical section extending orthogonal to the wall (20, 64, 109, 119, 129, 135, 134), wherein said inner edge includes an angle of less than 60° with the horizontal line at least in the region of a lower half (23, 69) of the slots (21, 65, 110, 115, 130, 136, 144).

10. The method according to claim 9, ***characterized in that*** the gas (26, 38) flows into regions of the membrane filter (1, 36, 71, 83, 92, 101), which are located farther outward from the at least one trough (19, 63, 107, 113, 127, 134, 142, 148), through gas conduits (66, 137) after flowing through a few of the slots (21, 65, 110, 115, 130, 136, 144).

11. The method according to claim 9 or 10, ***characterized in that*** the gas distribution system (18, 62, 126, 133, 141, 147) is arranged on the underside of the at least one membrane carrier (4, 41, 77, 96, 121), and **in that** the gas (26, 38) flows around the at least one membrane carrier (4, 41, 77, 96, 121) after flowing into the liquid.

## Revendications

1. Filtre à membrane (1, 36, 71, 83, 92, 101) pour filtrer un liquide (28, 37) à filtrer avec
a. au moins un support de membrane (4, 41, 77, 96, 121) sur lequel sont fixées des membranes ((121) à l'aide desquelles un perméat liquide (29, 44) peut être filtré à partir du liquide et qui comporte un espace de collecte de perméat (25, 47, 80, 90, 97, 124) auquel les membranes (122) sont raccordées ouvertes du côté perméat et une sortie de perméat (14, 48, 81) pour évacuer le perméat (29, 44) de l'espace de collecte de perméat (25, 47, 80, 90, 97, 124),
b. un système de distribution de gaz (18, 62, 126, 133, 141, 147) disposé sous au moins un support de membrane (4, 41, 77, 96, 121) avec au moins une cuve (19, 63, 107, 113, 127, 134, 142, 148) ouverte vers le bas et fermée en haut qui comporte une cloison (20, 64, 109, 119, 129, 135, 143) avec des fentes (21, 65, 110, 115, 130, 136, 144) verticales, ouvertes vers le bas pour répartir un gaz (26, 38) dans le liquide et
c. au moins une entrée de gaz (13, 14, 108, 146, 149) dans le système de distribution de gaz (18, 62, 126, 133, 141, 147),
**caractérisé en ce que**
d. au moins une cuve (19, 63, 107, 113, 127, 134, 142, 148) comporte un bord intérieur (112, 117, 132, 140, 145) respectivement entre les fentes adjacentes (21, 65, 110, 115, 130, 136, 144) dans au moins une découpe verticale, passant orthogonalement à la cloison (20, 64, 109, 119, 129, 135, 143), qui comporte au moins dans la zone d'une moitié inférieure (23,69) de la fente (21, 65, 110, 115, 130, 136, 144) dans chaque point, un angle inférieur à 60° par rapport à la ligne horizontale.

2. Filtre à membrane (1, 36, 71, 83, 92, 101) selon la revendication 1, **caractérisé en ce que** le système de distribution du gaz (18, 62, 126, 133, 141, 147) est constitué sur une face inférieure d'au moins un support de membrane (4, 41, 77, 96, 121).

3. Filtre à membrane (1, 36, 71, 83, 92, 101) selon l'une quelconque des revendications 1 ou 2, **caractérisé en ce qu'**au moins une cuve (19, 63, 107, 113, 127, 134, 142, 148) comporte respectivement entre les fentes adjacentes (21, 65, 110, 115, 130, 136, 144) au moins une nervure verticale (67, 114, 131) passant vers l'intérieur depuis la cloison (109, 119, 129, 135, 143), dont l'expansion diminue vers le bas dans au moins une cuve (19, 63, 107, 113, 127, 134, 142, 148).

4. Filtre à membrane (1, 36, 71, 83, 92, 101) selon l'une quelconque des revendications précédentes, **caractérisé en ce que** le système de distribution de gaz 18, 62, 126, 133, 141, 147) comporte des conduites de gaz ouvertes vers le bas (66, 137) qui se raccordent au moins à une partie de la fente (21, 65, 110, 115, 130, 136, 144) à l'extérieur pour transmettre et distribuer le gaz (26, 38) depuis au moins une cuve (19, 63, 107, 113, 127, 134, 142, 148).

5. Filtre à membrane (1, 36, 71, 83, 92, 101) selon l'une quelconque des revendications précédentes, **caractérisé en ce que** les conduites de gaz (66, 137) se raccordent décalées verticalement vers le haut à la fente (21, 65, 110, 115, 130, 136, 144).

6. Filtre à membrane (1, 36, 71, 83, 92, 101) selon l'une quelconque des revendications précédentes, **caractérisé en ce que** les fentes (21, 65, 110, 115, 130, 136, 144) s'élargissent vers le bas.

7. Filtre à membrane (1, 36, 71, 83, 92, 101) selon l'une quelconque des revendications précédentes, **caractérisé en ce que** les fentes (21, 65, 110, 115, 130, 136, 144) comportent des surfaces de section de tailles différentes.

8. Filtre à membrane (1, 36, 71, 83, 92, 101) selon l'une quelconque des revendications précédentes, **caractérisé en ce qu'**au moins une entrée de gaz (13, 46, 108, 146, 149) se raccorde latéralement à au moins une cuve (19, 63, 107, 113, 127, 134, 142, 148).

9. Procédé pour filtrer un liquide dans un filtre à membrane (1, 36, 71, 83, 92, 101) avec au moins un support de membrane (4, 41, 77, 96, 121), au moins une entrée de gaz (13, 46, 108, 146, 149) et un système de distribution de gaz (18, 62, 126, 133, 141, 147) avec au moins une cuve (19, 63, 107, 113, 127, 134, 142, 148) ouverte vers le bas et fermée en haut, qui comporte une cloison (109, 119, 129, 135, 143) avec des fentes (21, 65, 110, 115, 130, 136, 144) ouvertes vers le bas,
a. un gaz (26, 38) pénétrant par au moins une entrée de gaz (13, 46, 108)146, 149) dans au moins une cuve (19, 63, 107, 113, 127, 134, 142, 148),
b. le gaz (26, 38) remplissant au moins une cuve (19, 63, 107, 113, 127, 134, 142, 148) et la fente (21, 65, 110, 115, 130, 136, 144) jusqu'à une partie d'une hauteur de la fente (21, 65, 110, 115, 130, 136, 144) avec un coussin de gaz (27),
c. le gaz (26, 38) sortant du coussin de gaz (27) par la fente (21, 65, 110, 115, 130, 136, 144) latéralement vers l'extérieur depuis au moins une cuve (19, 63, 107, 113, 127, 134, 142, 148) et pénétrant à cet effet à plusieurs endroits dans le liquide en dessous d'au moins un support de membrane (4, 41, 77, 96, 121),
d. le gaz (26, 38) générant lors du passage latérale à travers la fente (21, 65, 110, 115, 130, 136, 144) un écoulement de liquide orienté parallèlement au flux de gaz latéral à la limite de phase en dessous du coussin de gaz (27),
e. le gaz (26, 38) montant dans le filtre à membrane (1, 36, 71, 83, 92, 101) et générant par ce fait un mouvement de montée du liquide dans le filtre à membrane (1, 36, 71, 83, 92, 101) et
f. le liquide montant et le gaz (26, 38) rinçant au moins un support de membrane (4, 41, 77, 96, 121) et les membranes qui y sont fixées (122),
**caractérisé en ce que**
g. l'écoulement de liquide généré en dessous du coussin de gaz (27) afflue sur un bord intérieur (112, 117, 132, 140, 145) d'au moins une cuve (19, 63, 107, 113, 127, 134, 142, 148) respectivement entre les fentes adjacentes (21, 65, 110, 115, 130, 136, 144) dans au moins une découpe verticale, passant orthogonalement à la cloison (20, 64, 109, 119, 129, 135, 143), qui comporte au moins dans la zone d'une moitié inférieure (23,69) de la fente (21, 65, 110, 115, 130, 136, 144) un angle inférieur à 60° par rapport à la ligne horizontale.

10. Procédé selon la revendication 9, **caractérisé en ce que** le gaz (26, 38) après passage de certaines des fentes (21, 65, 110, 115, 130, 136, 144) s'écoule à travers les conduites de gaz (66, 137) dans les zones du filtre à membrane (1, 36, 71, 83, 92, 101) éloignées vers l'extérieur plus loin d'au moins une cuve (19, 63, 107, 113, 127, 134, 142, 148).

11. Procédé selon la revendication 9 ou 10, **caractérisé en ce que** le système de distribution de gaz (18, 62, 126, 133, 141, 147) est constitué sur la face inférieure d'au moins un support de membrane (4, 41, 77, 96, 121) et **en ce que** le gaz (26,38) s'écoule autour d'au moins un support de membrane (4, 41, 77, 96, 121) après pénétration dans le liquide.
